# EUROPEAN PATENT APPLICATION

(11) **EP 4 557 465 A1**
(43) Date of publication of application: **21.05.2025**
(21) Application number: 23839546.1
(22) Date of filing: 05.07.2023
(51) Int. Cl.: H01M 50/131, H01M 10/0566, H01M 10/0585, H01M 50/119, H01M 50/121, H01M 50/124, H01M 50/129

(54) **FLUORINE RESIN FILM FOR BATTERY OUTER PACKAGING, BATTERY OUTER PACKAGING, AND SECONDARY BATTERY**

(30) Priority: 14.07.2022 JP 2022112826
(71) Applicant: DAIKIN INDUSTRIES, LTD., Osaka-shi, Osaka 530-0001 (JP)
(72) Inventor: HIRAGA, Kentarou, Osaka-shi, Osaka 530-0001 (JP); YAMADA, Takaya, Osaka-shi, Osaka 530-0001 (JP); KOMORI, Hirokazu, Osaka-shi, Osaka 530-0001 (JP); TERADA, Junpei, Osaka-shi, Osaka 530-0001 (JP); HIGUCHI, Tatsuya, Osaka-shi, Osaka 530-0001 (JP); SUGIYAMA, Akinari, Osaka-shi, Osaka 530-0001 (JP)
(74) Representative: Hoffmann Eitle
(86) International application number: PCT/JP2023/024916
(87) International publication number: WO 2024/014374

(57) **Abstract**

The present disclosure provides a fluororesin film for a battery exterior body, which is excellent in adhesion to a metal layer. The present disclosure further provides a battery exterior body which is excellent in electrolytic solution permeation resistance. The fluororesin film for a battery exterior body is a fluororesin film for a battery exterior body, comprising a composition comprising a fluororesin, wherein an oxygen element ratio obtained when a surface state of one or both surfaces of the film is measured by a scanning X-ray photoelectron spectrometer (XPS/ESCA) after the film is subjected to heat treatment of 180°C × 3 minutes is 1.35 atomic% or more, and when the film is subjected to heat treatment of 180°C × 10 minutes and then cooled down to 25°C, an absolute value of a rate of dimensional change in MD and TD, as measured before and after the heat treatment, is 2% or less.

## Description

### Technical Field

The present disclosure relates to a fluororesin film for a battery exterior body, a battery exterior body, and a secondary battery.

### Background Art

Lithium ion secondary batteries have become increasingly important in recent years as secondary batteries to be used in various fields, and improvement in their performance has also been desired.

As one of improvements in such performance, longer battery service life has been studied from many viewpoints. Studies of battery exterior bodies as one of these have been also made.

A lithium ion secondary battery generally has a form in which a main body that is a sheet-like laminate is encased in a battery case. Especially, a battery case of a laminate type battery is generally composed of a laminate having a metal layer of aluminum or the like and a resin film (Patent Literatures 1 and 2).

### Citation List

### Patent Literature

Patent Literature 1: Japanese Patent Laid-Open No. 2000-268873
Patent Literature 2: Japanese Patent Laid-Open No. 2002-16712

### Summary of Invention

### Technical Problem

The present disclosure is to provide a fluororesin film for a battery exterior body, which is excellent in adhesion to a metal layer. Further, the present disclosure is to provide a battery exterior body which is excellent in electrolytic solution permeation resistance.

### Solution to Problem

The present disclosure relates to a fluororesin film for a battery exterior body, comprising a composition comprising a fluororesin, wherein
an oxygen element ratio obtained when a surface state of one or both surfaces of the film is measured by a scanning X-ray photoelectron spectrometer (XPS/ESCA) after the film is subjected to heat treatment of 180°C × 3 minutes is 1.35 atomic% or more, and
when the film is subjected to heat treatment of 180°C × 10 minutes and then cooled down to 25°C, an absolute value of a rate of dimensional change in MD and TD, as measured before and after the heat treatment, is 2% or less.

The oxygen element ratio is preferably 1.5 atomic% or more.

The fluororesin film for a battery exterior body preferably comprises tetrafluoroethylene-perfluoroalkyl vinyl ether (PFA) or tetrafluoroethylene-hexafluoropropylene (FEP).

Regarding the fluororesin film for a battery exterior body, a difference between an oxygen element ratio obtained when a surface state of one or both surfaces of the film is measured by a scanning X-ray photoelectron spectrometer (XPS/ESCA), and an oxygen element ratio obtained when the film is measured by a scanning X-ray photoelectron spectrometer (XPS/ESCA) after the film is subjected to etching with an argon gas cluster ion beam at an incidence angle of 45° in the depth direction for 15 minutes is preferably 1.0 atomic% or more.

Regarding the fluororesin film for a battery exterior body, in only one or both surfaces, an adhesion strength when portions of the film in the same plane are bonded to each other at 200°C is preferably more than 30 N/m.

Regarding the fluororesin film for a battery exterior body, an adhesion strength when aluminum foil and the fluororesin film are bonded is preferably 500 N/m or more.

Electrolytic solution permeability of the fluororesin film for a battery exterior body is preferably 50 g/m²·day or less.

The present disclosure also provides a battery exterior body comprising the fluororesin film and a metal layer.

The battery exterior body further comprises a layer other than the metal layer and the fluororesin film, and
the layer other than the metal layer and the fluororesin film may be at least one selected from the group consisting of polyethylene, polypropylene, polyimide, a liquid crystal polymer, polyphenylene sulfide, a cycloolefin polymer, polystyrene, an epoxy resin, bismaleimide, polyphenylene oxide, polyphenylene ether, and polybutadiene.

In the battery exterior body, the fluororesin film is preferably provided on at least one plane in the thickness direction, and is preferably made to be present at a position in contact with an electrolytic solution when a battery is formed.

In the battery exterior body, the metal layer is preferably aluminum.

In the battery exterior body, an adhesion strength between the aluminum foil and the fluororesin film is preferably 500 N/mm or more.

The present disclosure also provides a secondary battery comprising the battery exterior body and an electrolytic solution.

In the secondary battery, the fluororesin film of the battery exterior body is preferably present at a position in contact with the electrolytic solution.

### Advantageous Effects of Invention

According to the present disclosure, a fluororesin film for a battery exterior body, which is excellent in adhesion to a metal layer, is obtained. According to the present disclosure, further, an exterior body for a battery, which is excellent in electrolytic solution permeation resistance, can be obtained.

### Brief Description of Drawing

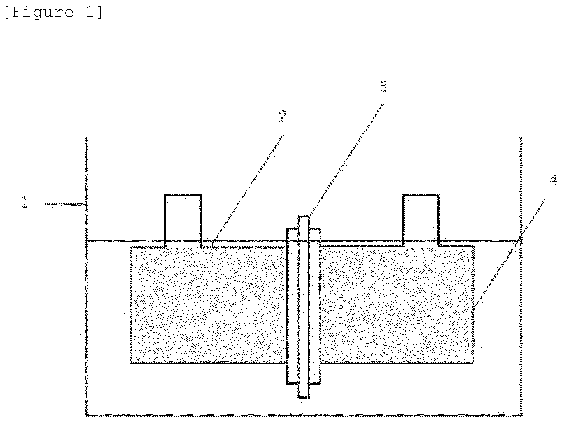

[Figure 1] Figure 1 is an explanatory diagram showing an overview of glassware to be used when electrolytic solution permeability of a fluororesin film is tested.

### Description of Embodiments

In the existing laminate type lithium ion batteries, a laminate in which a plurality of layers of polypropylene (PP) films and the like are stacked on a surface of metal foil such as aluminum foil or SUS foil has been commonly used as an exterior material. In such a laminate, however, deterioration of a battery attributable to high electrolytic solution permeability of the PP film becomes a problem.

Meanwhile, since a fluororesin film has excellent barrier property to an electrolytic solution, a battery exterior body using the fluororesin film and metal foil is excellent in electrolytic solution permeation resistance.

However, the fluororesin film is liable to suffer wrinkles during lamination to metal foil, and it has low adhesion to a metal, and accordingly, for example, in the production process, peeling between the fluororesin film and the metal layer is liable to occur to cause process defects, and sufficient electrolytic solution permeation resistance of the fluororesin film cannot be demonstrated in some cases.

In the present disclosure, use of a fluororesin film having particularly high adhesion ability enables the fluororesin film to be suitably used for battery exterior body applications.

In the present disclosure, by using a fluororesin film having sufficient adhesion in which an oxygen element ratio obtained when a surface state of a plane to be bonded to metal foil is measured by a scanning X-ray photoelectron spectrometer (XPS/ESCA) after the film is subjected to heat treatment of 180°C × 3 minutes is adjusted to 1.35 atomic% or more, production of a battery exterior body that is excellent in the electrolytic solution permeation resistance becomes feasible.

Further, when the fluororesin film of the present disclosure is subjected to heat treatment of 180°C × 10 minutes and then cooled down to 25°C, an absolute value of a rate of dimensional change in MD and TD, as measured before and after the heat treatment, is 2% or less, and hence, the shape of the rolled film does not change over time. Accordingly, wrinkles (tight winding) of the film do not occur, and adhesion to metal foil or the like can be improved.

As described above, it has been found that the laminate consisting of the fluororesin film of the present disclosure and a metal layer such as aluminum foil has good adhesion between layers and is excellent in electrolytic solution permeation resistance. Accordingly, the laminate can be suitably used as a battery exterior body.

Hereinafter, the present disclosure will be described more specifically.

The present disclosure relates to a fluororesin film for a battery exterior body. The fluororesin film for a battery exterior body comprises a composition containing a fluororesin. The resin to constitute the fluororesin film referred to herein is not limited, and may be a polymer partially containing a fluorine atom.

Two or more of the polymers partially containing a fluorine atom may be used. The fluororesin may contain at least one functional group selected from a carbonyl group-containing group (for example, an acid anhydride group, a group having a carbonyl group between carbon atoms of a hydrocarbon group, a carbonate group, a carboxy group, a haloformyl group, an alkoxycarbonyl group), a hydroxy group, an epoxy group, an amide group, an amino group, an isocyanate group, and the like. The composition containing a fluororesin may also contain a resin other than the fluororesin, a rubber, an additive, a filler, and the like.

The method to introduce the functional group is not limited, but for example, the functional group can be introduced when the fluororesin is produced. In this case, the functional group is derived from at least one selected from the group consisting of a monomer, a chain transfer agent, and a polymerization initiator, which are used during the production. Examples of the monomers include itaconic anhydride, citraconic anhydride, 5-norbornene-2,3-dicarboxylic anhydride, and maleic anhydride. Examples of the chain transfer agents include those derived from methanol, acetic acid, acetic anhydride, methyl acetate, ethylene glycol, propylene glycol, and the like. Examples of the polymerization initiators include ammonium persulfate, potassium persulfate, di-n-propyl peroxydicarbonate, diisopropyl peroxycarbonate, tert-butylperoxy isopropyl carbonate, bis(4-tert-butylcyclohexyl)peroxydicarbonate, and di-2-ethylhexyl peroxydicarbonate.

The fluororesin is more preferably a melt moldable fluororesin, and examples thereof include a tetrafluoroethylene-perfluoroalkyl vinyl ether copolymer (PFA), a copolymer having a chlorotrifluoroethylene (CTFE) unit (CTFE copolymer), a tetrafluoroethylene-hexafluoropropylene copolymer (FEP), a tetrafluoroethylene-ethylene copolymer (ETFE), polychlorotrifluoroethylene (PCTFE), a chlorotrifluoroethylene-ethylene copolymer (ECTFE), polyvinylidene fluoride (PVDE) and polyvinyl fluoride (PVF), a tetrafluoroethylene-hexafluoropropylene-vinylidene fluoride copolymer (THV), and a tetrafluoroethylene-vinylidene fluoride copolymer.

Among these melt moldable fluororesins, a tetrafluoroethylene-perfluoroalkyl vinyl ether copolymer (PFA) and a tetrafluoroethylene-hexafluoropropylene copolymer (FEP) are preferred. In particular, a tetrafluoroethylene-hexafluoropropylene copolymer (FEP) is preferred.

Since use of the melt moldable fluororesin enables melt molding, the processing cost can be more reduced than in the case of using PTFE. Moreover, when it is bonded to metal foil, adhesion can be improved.

The resin to form the fluororesin film preferably has a glass transition temperature of 40°C or higher. A glass transition temperature of 40°C or higher is preferred because, for example, when a roll film is stored at room temperature, deformation at the environmental temperature is less likely to occur, and the glass transition temperature is more preferably 60°C or higher, further preferably 80°C or higher. The upper limit is not limited, but from the viewpoint of adhesion, it is preferably 200°C or lower, more preferably 160°C or lower, further preferably 120°C or lower.

The above FEP is not limited, but preferred is a copolymer in which a mole ratio of TFE units to HFP units (TFE units/HFP units) is 70/30 or more and less than 99/1. The mole ratio is more preferably 70/30 or more and 98.9/1.1 or less, further preferably 80/20 or more and 97/3 or less. If the amount of the TFE units is too small, mechanical property tends to decrease, and if it is too large, the melting point excessively increases, and moldability tends to decrease. The FEP may be, for example, a copolymer consisting of TFE and HFP only, and is also preferably a copolymer in which the amount of monomer units derived from monomers copolymerizable with TFE and HFP is 0.1 to 10% by mol, and the total amount of the TFE units and the HFP units is 90 to 99.9% by mol. Examples of the monomers copolymerizable with TFE and HFP include alkyl perfluorovinyl ether derivatives. Examples of other copolymerizable monomers include cyclic hydrocarbon monomers having an acid anhydride group, and examples of acid anhydride-based monomers include itaconic anhydride, citraconic anhydride, 5-norbornene-2,3-dicarboxylic anhydride, and maleic anhydride. One of the acid anhydride-based monomers may be used singly, or two or more thereof may be used in combination.

The melting point of the FEP is preferably 150 to 320°C, more preferably 200 to 300°C, further preferably 240 to 280°C. The melting point is a temperature corresponding to a maximum value in a heat-of-fusion curve when the temperature is increased at a rate of 10°C/min using a differential scanning calorimeter [DSC].

MFR of the FEP is preferably 0.01 to 100 g/10 min, more preferably 0.1 to 80 g/10 min, further preferably 1 to 60 g/10 min, particularly preferably 1 to 50 g/10 min. The MFR in the present description is a value obtained by the measurement in accordance with ASTM D3307 under the conditions of a temperature of 372°C and a load of 5.0 kg.

The above PFA is not limited, but preferred is a copolymer in which a mole ratio of TFE units to PAVE units (TFE units/PAVE units) is 70/30 or more and less than 99.5/0.5. The mole ratio is more preferably 70/30 or more and 98.9/1.1 or less, further preferably 80/20 or more and 98.5/1.5 or less. If the amount of the TFE units is too small, mechanical property tends to decrease, and if it is too large, the melting point excessively increases, and moldability tends to decrease. The PFA may be, for example, a copolymer consisting of TFE and PAVE only, and is also preferably a copolymer in which the amount of monomer units derived from monomers copolymerizable with TFE and PAVE is 0.1 to 10% by mol, and the total amount of the TFE units and the PAVE units is 90 to 99.9% by mol. Examples of the monomers copolymerizable with TFE and PAVE include HFP, a vinyl monomer represented by CZ₃Z₄=CZ₅(CF₂)ₙZ₆ (wherein Z₃, Z₄, and Z₅ are the same or different and each represent a hydrogen atom or a fluorine atom, Z₆ represents a hydrogen atom, a fluorine atom, or a chlorine atom, and n represents an integer of 2 to 10), and an alkyl perfluorovinyl ether derivative represented by CF₂=CF-OCH₂-Rf₇ (wherein Rf₇ represents a perfluoroalkyl group having 1 to 5 carbon atoms). Examples of other copolymerizable monomers include cyclic hydrocarbon monomers having an acid anhydride group, and examples of acid anhydride-based monomers include itaconic anhydride, citraconic anhydride, 5-norbornene-2,3-dicarboxylic anhydride, and maleic anhydride. One of the acid anhydride-based monomers may be used singly, or two or more thereof may be used in combination.

The melting point of the PFA is preferably 180 to 340°C, more preferably 230 to 330°C, further preferably 280 to 320°C. The melting point is a temperature corresponding to a maximum value in a heat-of-fusion curve when the temperature is increased at a rate of 10°C/min using a differential scanning calorimeter [DSC].

The melt flow rate (MFR) of the PFA is preferably 0.1 to 100 g/10 min, more preferably 0.5 to 90 g/10 min, further preferably 1.0 to 85 g/10 min.

Since the fluororesin has a relatively high melting point as described above, it is excellent in heat resistance, and it can be suitably used for battery packaging material applications.

In the present description, the content of units of each monomer to constitute the fluororesin can be calculated by appropriately combining NMR, FT-IR, elemental analysis, and X-ray fluorescence analysis according to the type of the monomer.

The fluororesin film of the present disclosure may contain components other than the fluororesin.

Examples of the components that can be contained include, but not limited to, fillers such as silica particles and glass short fibers, and thermosetting resins and thermoplastic resins containing no fluorine. The content of the components other than the fluororesin is not limited, but is preferably, for example, 5% by mass or more and 60% by mass or less in the fluororesin film. The content is more preferably 10% by mass or more and 40% by mass or less.

As described above, the fluororesin is generally a material that is difficult to obtain adhesion to a metal. Therefore, in order to improve lamination characteristics, it is preferred to conduct surface treatment of the fluororesin film. Generally known as such surface treatment is such a method as mainly increases the oxygen atomic weight on the resin surface.

The effect of such surface treatment of the fluororesin film to improve adhesion tends to decrease by heating. This is presumably because oxygen atoms on the surface are eliminated by heating to cause reduction of the oxygen atomic weight on the surface. In the lamination process, in order to improve productivity, lamination may be conducted after preheating is conducted in advance at, for example, the glass transition temperature or higher and lower than the melting point, and in order that a fluorine film subjected to a heat history as above may have sufficient adhesion when it is laminated to metal foil, an oxygen atom ratio of a surface of the film to be bonded to the metal foil, as measured by a scanning X-ray photoelectron spectrometer (XPS/ESCA) after the film is subjected to heat treatment of 180°C × 3 minutes, must be 1.35 atomic% or more.

In the fluororesin film of the present disclosure, an oxygen element ratio obtained when a surface state of one or both surfaces of the film is measured by ESCA after the film is subjected to heat treatment of 180°C × 3 minutes is 1.35 atomic% or more. The oxygen atom ratio is more preferably 1.5 atomic% or more, further preferably 1.8 atomic% or more, most preferably 2.0 atomic% or more.

The heat treatment of 180°C × 3 minutes means that the film is placed on a metal tray and treated in an electric furnace under air atmosphere.

The fluororesin film of the present disclosure may be, for example, a fluororesin film in which a difference between an oxygen element ratio obtained when a surface state of one or both surfaces of the film is measured by a scanning X-ray photoelectron spectrometer (XPS/ESCA), and an oxygen element ratio obtained when the film is measured by a scanning X-ray photoelectron spectrometer (XPS/ESCA) after the film is subjected to etching with an argon gas cluster ion beam at an incidence angle of 45° in the depth direction for 15 minutes is 1.0 atomic% or more. By increasing only the oxygen element ratio of the surface that contributes to adhesion in this way, sufficient adhesion strength can be obtained without impairing electrolytic solution permeation resistance.

When the fluororesin film of the present disclosure is subjected to heat treatment of 180°C × 10 minutes and then cooled down to 25°C, an absolute value of a rate of dimensional change in MD and TD, as measured before and after the heat treatment, is 2% or less.

The rate of dimensional change is more preferably 1.8% or less, most preferably 1.5% or less.

In the present disclosure, the rate of dimensional change is determined by putting gage marks on a film sample cut into 300 mm square, at an interval of 180 mm, heat-treating the film for 10 minutes in an electric furnace set to 180°C under air atmosphere without applying a load, thereafter measuring a gage mark interval in each of the MD and the TD of the film that has been cooled down to 25°C, and performing calculation from the amount of change in the gage mark interval before and after the heat treatment.

For example, one of the causes of defects in the lamination process is that if a rolled film has wrinkles (tight winding), the film may be stacked with wrinkles in the lamination process. Such wrinkles (tight winding) in a rolled film are thought to be caused by a change in shape of the film over time.

Since such a change in shape of the film over time is thought to be due to residual stress in the film, it is necessary to suppress this. The method to suppress dimensional change is, for example, a method in which annealing treatment is conducted in order to relax residual stress in the fluororesin film, or a method in which production conditions such as melt extrusion conditions including a lip opening of a T-die and air gap and film winding conditions are adjusted so that the residual stress may not remain in the film production process.

Regarding the fluororesin film of the present disclosure, the adhesion strength obtained when portions of the film in the same plane, in only one or both surfaces, are bonded to each other at 200°C is preferably more than 30 N/m. By allowing the fluororesin film to have such an adhesion strength, the film exhibits excellent adhesion when it is used in combination with other various substrates even after the film is subjected to heat treatment. The adhesion strength is more preferably more than 50 N/m, further preferably more than 100 N/m.

For example, when the fluororesin film is bonded to aluminum foil, the adhesion strength is preferably 500 N/m or more.

Specifically, for example, when the fluororesin film is bonded to aluminum foil using a heat sealer under the conditions of a temperature of 320°C, an applied pressure of 1.5 MP, and a time of 100 to 300 seconds, the adhesion strength is preferably 500 N/m or more, more preferably 700 N/m or more, further preferably 900 N/m or more, most preferably 1000 N/m or more. The adhesion strength referred to herein means an adhesion strength of a laminate that has been bonded under the aforementioned conditions, the adhesion strength being measured under the conditions described in Examples.

By allowing the film to have such an adhesion strength, the film becomes excellent in adhesion to a metal layer, and when the film is formed into a battery exterior body, it has excellent interlaminar adhesion and becomes excellent in electrolytic solution permeation resistance.

The electrolytic solution permeability of the fluororesin film of the present disclosure is preferably 50 g/m²·day or less. It is more preferably 30 g/m²·day or less, further preferably 20 g/m²·day or less. The electrolytic solution permeability means electrolytic solution permeability measured under the conditions described in Examples.

The fluororesin film of the present disclosure can be used as a film of a battery exterior body by laminating it to another substrate.

The thickness of the fluororesin film of the present disclosure is more preferably 5 to 500 µm, further preferably 12.5 to 150 µm. By setting the thickness within the above range, the thickness of a laminate can be reduced while maintaining electrolytic solution permeation resistance, and this leads to downsizing of a battery when the film is used for an exterior body of the battery.

### (Method for producing fluororesin film)

Hereinafter, an example of a method for producing the aforementioned fluororesin film of the present disclosure will be described in detail. The fluororesin film of the present disclosure is not limited to one produced by the following production method.

A method for forming the fluororesin film of the present disclosure that is in a film state is not limited, and examples thereof include a method using melt forming such as extrusion forming and a method using a casting method in which a solution or a dispersion containing a fluororesin is prepared and then the solution or the dispersion is applied to a substrate and dried. Further, the film may be a film stretched by monoaxial stretching or biaxial stretching, or may be an unstretched film.

By subjecting the fluororesin film obtained by such a method as above to surface treatment and annealing treatment of one or both surfaces under appropriate conditions, a fluororesin film that meets the above requirements can be obtained.

In order to obtain a fluororesin film that meets the above performance, the treatment process conditions after forming the fluororesin film are important. As described above, an example of the method for decreasing a shrinkage rate in order to achieve the objects of the present disclosure is annealing treatment.

The annealing treatment for the fluororesin film is generally heat treatment. Therefore, when annealing treatment is conducted after surface treatment, the oxygen atomic weight decreases to cause reduction of adhesion ability. Moreover, reduction of adhesion ability due to preheating process during lamination also occurs, and therefore, when annealing treatment is conducted, it is necessary to select appropriate conditions as the conditions of the surface treatment and the annealing treatment. In order that such problems due to the annealing treatment should not occur, a technique to reduce internal stress by adjusting the film production process, or the like may be adopted.

In the present disclosure, by adjusting various conditions described above and thereby providing a fluororesin film that meets the aforementioned requirements, defects in the lamination process are reduced, and at the same time, good adhesion is obtained.

A specific method for the surface modification is not limited, and the surface modification can be conducted by any known method.

For the surface modification of the fluororesin film, conventional discharge treatment using corona discharge treatment, glow discharge treatment, plasma discharge treatment, sputtering treatment, and the like can be adopted. For example, introduction of oxygen gas, nitrogen gas, hydrogen gas, or the like into a discharge atmosphere enables control of surface free energy, and in addition, surface modification can be conducted by exposing a surface to be modified to an atmosphere of an organic compound-containing inert gas that is an inert gas containing an organic compound, applying highfrequency voltage between electrodes to cause a discharge to thereby produce active species on the surface, and then introducing a functional group of an organic compound or graft polymerizing a polymerizable organic compound. Examples of the inert gases include nitrogen gas, helium gas, and argon gas.

The organic compound in the organic compound-containing inert gas is, for example, a polymerizable or nonpolymerizable organic compound having an oxygen atom, and examples thereof include vinyl esters such as vinyl acetate and vinyl formate; acrylates such as glycidyl methacrylate; ethers such as vinyl ethyl ether, vinyl methyl ether, and glycidyl methyl ether; carboxylic acids such as acetic acid and formic acid; alcohols such as methyl alcohol, ethyl alcohol, phenol, and ethylene glycol; ketones such as acetone and methyl ethyl ketone; carboxylates such as ethyl acetate and ethyl formate; and acrylic acids such as acrylic acid and methacrylic acid. Among these, vinyl esters, acrylates, and ketones are preferred, and vinyl acetate and glycidyl methacrylate are particularly preferred, from the viewpoint that the modified surface is hard to deactivate, that is, from the viewpoint of a long life and ease of handling in view of safety.

The concentration of the organic compound in the organic compound-containing inert gas varies depending on the type thereof, the type of the fluororesin to be surface modified, and the like, but is usually 0.1 to 3.0% by volume, preferably 0.1 to 1.0% by volume, more preferably 0.15 to 1.0% by volume, further preferably 0.30 to 1.0% by volume. The discharge conditions are appropriately selected according to the desired degree of surface modification, the type of the fluororesin, the type and the concentration of the organic compound, and the like. Usually, the discharge treatment is conducted with a discharge amount in the range of 50 to 1500 W·min/m², preferably 70 W·min/m² or more and 1400 W·min/m² or less. The discharge treatment can be conducted at any temperature in the range of 0°C or higher and 100°C or lower. From the viewpoint of concerns about stretching, wrinkles and the like of the film, the temperature is preferably 80°C or lower. Regarding the degree of surface modification, an abundance ratio of an oxygen element, as observed by ESCA, is 2.6% or more, preferably 2.8% or more, more preferably 3.0% or more, further preferably 3.5% or more, taking into consideration decrease in adhesion ability of the surface due to heat or the like during the post processing. The upper limit is not defined, but taking into consideration influence on the productivity and other properties, it is preferably 25.0% or less. The abundance ratio of a nitrogen element is not defined, but it is preferably 0.1% or more.

In the production of the fluororesin film of the present disclosure, it is preferred to conduct annealing treatment after the surface treatment is conducted. In the process to laminate the film and another material such as metal foil to each other, heat treatment is conducted in some cases. Therefore, through the heat treatment, the amount of oxygen on the surface of the fluororesin film decreases. Accordingly, it is preferred to conduct surface modification under such conditions that a sufficient amount of surface oxygen is obtained at the time of laminating the fluororesin film and another material such as metal foil to each other.

### (Annealing treatment)

The annealing treatment can be conducted by heat treatment. The heat treatment can be conducted by, for example, passing the film through a heating furnace on Roll-to-Roll system.

The annealing treatment temperature is preferably the glass transition temperature -20°C or higher and lower than the melting point, more preferably the glass transition temperature or higher and the melting point - 20°C or lower, further preferably the glass transition temperature or higher and the melting point -60°C or lower. The annealing treatment time is not limited, but for example, it is preferred to appropriately adjust the time within the range of 0.5 to 60 minutes. If the film that has passed through the annealing furnace comes into contact with a roll of a winding device while the film is still hot, deformation (waving) of the film due to thermal shrinkage caused by temperature change is likely to occur. In order to prevent this, the film may be cooled by passing the film through a cooling zone after the high-temperature annealing zone, and then wound up with a winding device. The cooling method is not limited, but the film can be cooled with cold air or a cooling roll, and the film temperature is preferably set to lower than the glass transition temperature.

In the case where heating is conducted on the above Roll-to-Roll system, the tension may be appropriately adjusted according to the thickness of the film, the set temperature, and the like, but it is preferably 20 N/m or less. Heating under such conditions is preferred because the internal stress can be sufficiently relaxed, and dimensional change and the like do not occur.

The order of the above surface treatment and annealing treatment is not limited, and the number of times to conduct each process is not limited to once, and each process may be conducted twice or more. Since tension is applied in the surface treatment process, it is preferred to conduct annealing treatment after the surface treatment is conducted, from the viewpoint of controlling the thermal shrinkage rate. Before or after these treatment, the film may be slit to prescribed width and length, and in this case, it is preferred to adjust the tension so that the film should not be stretched.

As described above, in the present disclosure, by adjusting various conditions described above to obtain a fluororesin film that meets the aforementioned requirements, a film reduced in defects in the lamination process and simultaneously having good adhesion is provided.

### <Battery exterior body>

The present disclosure also provides a battery exterior body comprising the aforementioned fluororesin film and a metal layer.

The battery exterior body stores inside a battery element including a positive electrode, a negative electrode, and an electrolytic solution, and is used for preventing external shocks, environmental deterioration, and the like when a battery is used.

The battery exterior body of the present disclosure has a layer structure formed of the aforementioned fluororesin film and a metal layer.

Particularly, the battery exterior body of the present disclosure is suitably used for a laminate type battery. The battery exterior body of the present disclosure is excellent in electrolytic solution permeation resistance.

Examples of the above metal layer include foils of metals such as aluminum (Al) and stainless steel (SUS). Among them, aluminum (Al) foil is preferred.

The thickness of the metal layer is not limited, but is preferably in the range of 1 to 100 µm, more preferably in the range of 5 to 50 µm, further preferably 9 to 40 µm. By setting the thickness in the above range, the thickness of the laminate can be reduced while maintaining electrolytic solution permeation resistance, and this leads to downsizing of a battery when the laminate is used as an exterior body of the battery.

In the battery exterior body of the present disclosure, the fluororesin film of the present disclosure is excellent in adhesion to the metal layer as previously described, and therefore, it is preferred to use the fluororesin film as a layer that comes into direct contact with the metal layer.

In the battery exterior body, for example, an adhesion strength between aluminum foil and the fluororesin film is preferably 500 N/m or more.

Specifically, in the case where aluminum foil and the fluororesin film are bonded using a heat sealer under the conditions of a temperature of 320°C, an applied pressure of 1.5 MP, and a time of 100 to 300 seconds, an adhesion strength between them is preferably 500 N/m or more, more preferably 700 N/m or more, further preferably 900 N/m or more, most preferably 1000 N/m or more.

The adhesion strength referred to herein means an adhesion strength of a laminate that has been bonded under the aforementioned conditions, the adhesion strength being measured under the conditions described in Examples.

Alternatively, the battery exterior body of the present disclosure may be one further having a layer other than the metal layer and the fluororesin film.

The layer other than the metal layer and the fluororesin film is, for example, a film composed of at least one selected from the group consisting of polyethylene, polypropylene, polyimide, a liquid crystal polymer, polyphenylene sulfide, a cycloolefin polymer, polystyrene, an epoxy resin, bismaleimide, polyphenylene oxide, polyphenylene ether, and polybutadiene.

The fluororesin film of the present disclosure has good adhesion also to such resins as above.

The thickness of the film other than the fluororesin film is not limited, but is preferably in the range of 1 to 100 µm, more preferably in the range of 5 to 50 µm,further preferably 9 to 35 µm.

The layer structure of the battery exterior body of the present disclosure is not limited, and is appropriately set according to the purpose. A laminate type battery exterior body is, for example, one having a sealed hermetic structure obtained by thermally fusion bonding resin layers to each other when a battery is formed.

Such a battery exterior body preferably has, for example, a structure of outer layer film/metal layer/inner layer film, and the outer layer film and the inner layer film may be each a single layer film or a multi-layer film in which a plurality of the same or different films are stacked.

Since the fluororesin film of the present disclosure is excellent in adhesion to a metal layer as described above, the battery exterior body is preferably constituted so that the fluororesin film comes into direct contact with the metal layer. In the battery exterior body of the present disclosure, the fluororesin film is provided on at least one plane in the thickness direction, and is preferably made to be present at a position in contact with an electrolytic solution when a battery is formed.

Since the fluororesin film of the present disclosure is stable to an electrolytic solution and has excellent heat sealability, it can be suitably used as an innermost layer of the battery exterior body. By providing the fluororesin film as an innermost layer so as to be in contact with the electrolytic solution, the effect of electrolytic solution permeation resistance is exerted more effectively.

The method to combine metal foil, the fluororesin film, and the like is not limited, and is, for example, a method in which pressure is applied to a metal layer, a fluororesin film formed in advance, and the like under heating using Roll-to-Roll system or a press to stack them.

Since the fluororesin film of the present disclosure exerts the effect that defects are less likely to occur in the lamination process and good adhesion to metal foil can also be obtained, a laminate that can be suitably used for a battery exterior body can be provided.

Particularly when a resin layer is thermally fusion bonded through a current collector terminal to form a sealed structure, joining of a metal and a resin can also be favorably conducted.

The exterior body for a battery may be appropriately formed according to the form of a battery to be produced. For example, it is cut to a desired size or subjected to forming (deep draw forming, stretch forming, or the like) to obtain a formed case.

The present disclosure also provides a secondary battery comprising the above battery exterior body and an electrolytic solution.

The secondary battery is, for example, an alkali metal or alkaline earth metal secondary battery. Specific examples thereof include a lithium ion secondary battery, a lithium metal secondary battery, a sodium battery, and a calcium battery.

Examples of the shape of the secondary battery include laminate type, cylindrical shape, square shape, and pin shape.

Particularly, a laminate type lithium ion secondary batter is preferred.

In the secondary battery of the present disclosure, a negative electrode, a positive electrode, an electrolytic solution, a separator, and the like to be used in a known secondary battery can be used. Hereinafter, these will be described in detail.

### <Negative electrode>

In the secondary battery of the present disclosure, the negative electrode is preferably composed of a negative electrode active material layer containing a negative electrode active material, and a current collector.

The negative electrode contains graphite, a silicon-based material, a tin-based material, or an alkali metal-containing metal composite oxide material.

The negative electrode active material is further specifically any one of carbonaceous materials capable of absorbing/desorbing alkali metals, such as pyrolyzates of organic materials obtained under various pyrolysis conditions, artificial graphite, and natural graphite; silicon-based materials and tin-based materials capable of absorbing/desorbing alkali metals, such as tin oxide and silicon oxide; and alkali metal-containing metal composite oxide materials. These negative electrode active materials may be used by mixing two or more thereof.

The carbonaceous materials capable of absorbing/desorbing alkali metals are preferably artificial graphites produced by high-temperature treatment of easily graphitizable pitch obtained from various raw materials or purified natural graphites, or materials obtained by subjecting these graphites to surface treatment with pitch or other organic materials and then carbonizing them; and are more preferably materials selected from carbonaceous materials obtained by subjecting natural graphites, artificial graphites, artificial carbonaceous substances or artificial graphitic substances to heat treatment once or more at a temperature in the range of 400 to 3200°C, carbonaceous materials regarding which the negative electrode active material layer is composed of carbonaceous matters having at least two or more different crystalline properties, and/or has an interface at which the carbonaceous matters of the different crystalline properties are in contact with each other, and carbonaceous materials regarding which the negative electrode active material layer has an interface at which carbonaceous matters of at least two or more different orientation properties are in contact with each other, because the balance between the initial irreversible capacity and the high current density charge/discharge characteristics is good. One of these carbon materials may be used singly, or two or more thereof may be used in any combination at any ratio.

Examples of the carbonaceous materials obtained by subjecting the above artificial carbonaceous substances or artificial graphitic substances to heat treatment once or more at a temperature in the range of 400 to 3200°C include coal-based coke, petroleum-based coke, coal-based pitch, petroleum-based pitch, and products obtained by oxidation treatment of these pitches, needle coke, pitch coke, and carbon agents obtained by partially graphitizing these, furnace black, acetylene black, pyrolysis products of organic materials such as pitch-based carbon fibers, carbonizable organic materials and carbides thereof, solutions obtained by dissolving carbonizable organic materials in low-molecular organic solvents such as benzene, toluene, xylene, quinoline and n-hexane, and carbides thereof.

Specific examples of the silicon-based material and the tin-based material include simple Si, SiB₄, SiB₆, Mg₂Si, Ni₂Si, TiSi₂, MoSi₂, CoSi₂, NiSi₂, CaSi₂, CrSi₂, Cu₆Si, FeSi₂, MnSi₂, NbSi₂, TaSi₂, VSi₂, WSi₂, ZnSi₂, SiC, Si₃N₄ Si₂N₂O, SiOᵥ (0<v≤2), LiSiO, simple tin, SnSiO₃, LiSnO, Mg₂Sn, and SnO_{w} (0<w≤2).

Also available are composite materials containing Si or Sn as a first constituent element and containing, in addition thereto, second and third constituent elements. The second constituent element is, for example, at least one selected from the group consisting of cobalt, iron, magnesium, titanium, vanadium, chromium, manganese, nickel, copper, zinc, gallium and zirconium. The third constituent element is, for example, at least one selected from the group consisting of boron, carbon, aluminum and phosphorus.

Particularly because high battery capacity and excellent battery characteristics are obtained, preferred as the metal materials are simple silicone or tin (may contain trace amounts of impurities), SiOᵥ (0<v≤2), SnO_{w} (0≤w≤2), a Si-Co-O composite material, a Si-Ni-C composite material, a Sn-Co-C composite material, a Sn-Ni-C composite material, and the like.

The alkali metal-containing metal composite oxide material to be used as the negative electrode active material is not limited as long as it is capable of absorbing/desorbing an alkali metal, but from the viewpoint of high current density charge/discharge characteristics, preferred is a material containing titanium and an alkali metal, more preferred is an alkali metal-containing composite metal oxide material containing titanium, and further preferred is a composite oxide of an alkali metal and titanium (referred to as "alkali metal titanium composite oxide" hereinafter). In other words, an alkali metal titanium composite oxide having a spinel structure is particularly preferred because if it is used by adding it to the negative electrode active material for an electrolytic solution battery, output resistance is significantly reduced.

The alkali metal titanium composite oxide is preferably a compound represented by the general formula:

MpTiqM⁸rO₄

wherein M is at least one metal selected from the group consisting of Li, Na, and K; and M⁸ represents at least one element selected from the group consisting of Na, K, Co, Al, Fe, Ti, Mg, Cr, Ga, Cu, Zn and Nb.

In the above, M is preferably one metal selected from the group consisting of Li, Na, and K, more preferably Li or Na, further preferably Li.

Because of good balance of battery performance, particularly preferred are compounds satisfying the following, among the above compositional features.
(i) 1.2≤p≤1.4, 1.5≤q≤1.7, r=0
(ii) 0.9≤p≤1.1, 1.9≤q≤2.1, r=0
(iii) 0.7≤p≤0.9, 2.1≤q≤2.3, r=0

Particularly preferred compositional features of the above compounds are: M_{4/3}Ti_{5/3}O₄ in the case of (i), M₁Ti₂O₄ in the case of (ii), and M_{4/5}Ti_{11/5}O₄ in the case of (iii). Regarding the structure of r#0, for example, M_{4/3}Ti_{4/3}Al_{1/3}O₄ is preferred.

The negative electrode mixture preferably further contains a binder, a thickening agent, and a conductive material.

The binder to be used may be any material that is safe against a solvent to be used in production of the electrode and the electrolytic solution. Examples thereof include resin polymers such as polyethylene, polypropylene, polyethylene terephthalate, polymethyl methacrylate, aromatic polyamide, chitosan, alginic acid, polyacrylic acid, polyimide, cellulose, and nitro cellulose; rubbery polymers such as SBR (styrene-butadiene rubber), isoprene rubber, butadiene rubber, fluoroelastomers, NBR (acrylonitrile-butadiene rubber), and ethylene-propylene rubber; styrene-butadiene-styrene block copolymers and hydrogenated products thereof; thermoplastic elastomeric polymers such as EPDM (ethylene-propylene-diene terpolymers), styrene-ethylene-butadiene-styrene copolymers, and styrene-isoprene-styrene block copolymers and hydrogenated products thereof; soft resin polymers such as syndiotactic-1,2-polybutadiene, polyvinyl acetate, ethylene-vinyl acetate copolymers, and propylene-α-olefin copolymers; fluoropolymers such as polyvinylidene fluoride, polytetrafluoroethylene, vinylidene fluoride copolymer, and tetrafluoroethylene-ethylene copolymers; and polymer compositional features having ion conductivity of alkali metal ions (especially, lithium ions). One of these may be used singly, or two or more thereof may be used in any combination at any ratio.

The proportion of the binder with respect to the negative electrode active material is preferably 0.1% by mass or more, further preferably 0.5% by mass or more, particularly preferably 0.6% by mass or more, while preferably 20% by mass or less, more preferably 15% by mass or less, further preferably 10% by mass or less, particularly preferably 8% by mass or less. If the proportion of the binder with respect to the negative electrode active material exceeds the above range, the proportion of the binder at which the amount of the binder does not contribute to the battery capacity may increase to induce decrease in the battery capacity. If the proportion thereof falls below the above range, decrease in strength of the negative electrode may be induced.

Particularly in the case where a rubbery polymer typified by SBR is contained as a main component, the proportion of the binder with respect to the negative electrode active material is usually 0.1% by mass or more, preferably 0.5% by mass or more, further preferably 0.6% by mass or more, while usually 5% by mass or less, preferably 3% by mass or less, further preferably 2% by mass or less. In the case where a fluoropolymer typified by polyvinylidene fluoride is contained as a main component, the proportion of the binder with respect to the negative electrode active material is usually 1% by mass or more, preferably 2% by mass or more, further preferably 3% by mass or more, while usually 15% by mass or less, preferably 10% by mass or less, further preferably 8% by mass or less.

Examples of the thickening agent include carboxymethyl cellulose, methyl cellulose, hydroxymethyl cellulose, ethyl cellulose, polyvinyl alcohol, oxidized starch, monostarch phosphate, casein, polyvinylpyrrolidone, and salts thereof. One of these may be used singly, or two or more thereof may be used in any combination at any ratio.

The proportion of the thickening agent with respect to the negative electrode active material is usually 0.1% by mass or more, preferably 0.5% by mass or more, further preferably 0.6% by mass or more, while usually 5% by mass or less, preferably 3% by mass or less, further preferably 2% by mass or less. If the proportion of the thickening agent with respect to the negative electrode active material falls below the above range, coating property significantly decreases in some cases. If the proportion exceeds this range, the proportion of the negative electrode active material in the negative electrode active material layer decreases, there may be problems such as decrease in the capacity of the battery and resistance between the negative electrode active materials may increase.

The conductive material to be used may be any known conductive material. Specific examples thereof include metal materials such as copper and nickel, and carbon materials such as graphite, including natural graphite and artificial graphite, carbon black, including acetylene black, Ketjen black, channel black, furnace black, lamp black, and thermal black, and amorphous carbon, including needle coke, carbon nanotube, fullerene, and VGCF. One of these may be used singly, or two or more thereof may be used in any combination at any ratio.

The conductive material is used so that the content thereof in the negative electrode active material layer is usually 0.01% by mass or more, preferably 0.1% by mass or more, more preferably 1% by mass or more, while usually 50% by mass or less, preferably 30% by mass or less, more preferably 15% by mass or less. If the content thereof falls below this range, electric conductivity may become insufficient. In contrast, if the content thereof exceeds this range, battery capacity may decrease.

The type of the solvent for forming the slurry is not limited as long as it is a solvent capable of dissolving or dispersing the negative electrode active material, the binder, and the thickening agent and the conductive material that are used as needed, and any of an aqueous solvent and an organic solvent may be used.

Examples of the aqueous solvent include water and alcohols; and examples of the organic solvent include N-methylpyrrolidone (NMP), dimethylformamide, dimethylacetamide, methyl ethyl ketone, cyclohexanone, methyl acetate, methyl acrylate, diethyltriamine, N,N-dimethylaminopropylamine, tetrahydrofuran (THF), toluene, acetone, diethyl ether, dimethylacetamide, hexamethylphospharamide, dimethyl sulfoxide, benzene, xylene, quinoline, pyridine, methylnaphthalene and hexane.

The amount of the solvent to be blended is determined taking into consideration coating property to the current collector, formation of a thin film after drying, and the like. The proportion between the binder and the solvent is preferably 0.5:99.5 to 20:80, by mass ratio.

In order to further improve adhesion to the current collector, the negative electrode active material layer may further contain, for example, acrylic resins such as polymethacrylate and polymethyl methacrylate, polyimides, polyamides, and polyamideimide-based resins. By adding a cross-linking agent to the negative electrode active material layer and irradiating the layer with radiation such as γ-ray or electron beam, a crosslinked structure may be formed. The crosslinking treatment method is not limited to the radiation irradiation, and other crosslinking methods may be conducted, for example, thermally crosslinkable amine group-containing compounds, cyanurate group-containing compounds or the like may be added to perform thermal crosslinking.

In order to improve dispersion stability of the slurry, dispersants such as a resin-based dispersant having surface-active action and the like, a cationic surfactant and a nonionic surfactant and the like may be added.

Examples of the material of the current collector for a negative electrode include metal materials including metals such as copper, nickel, titanium, tantalum, and stainless steel, and alloys thereof; and carbon materials such as carbon cloth and carbon paper. Preferred among these are metal materials, especially copper, nickel, or an alloy thereof.

In the case of a metal material, the current collector may be in the form of metal foil, metal cylinder, metal coil, metal plate, metal thin film, expanded metal, punched metal, metal foam, or the like. In the case of a carbon material, the current collector may be in the form of carbon plate, carbon thin film, carbon cylinder, or the like. Preferred among these is a metal thin film. The thin film may be in the form of mesh, as appropriate.

The thin film may have any thickness, and the thickness is usually 1 µm or more, preferably 3 µm or more, more preferably 5 µm or more, while usually 1 mm or less, preferably 100 µm or less, more preferably 50 µm or less. If the thin film is thinner than the above range, the strength thereof required for a current collector may become insufficient. In contrast, if the thin film is thicker than this range, the handleability may be impaired.

Production of the negative electrode may be conducted in accordance with a conventional method. For example, there is a method in which the negative electrode material are added the aforementioned binder, thickening agent, conductive material, solvent and the like to form a slurry, and the slurry is applied to the current collector, dried, then pressed and thereby densified. When an alloyed material is employed, also used is a method for forming a thin film layer containing the above negative electrode active material (negative electrode active material layer) by approaches such as vapor deposition, sputtering, and plating.

When the negative electrode active material is formed into an electrode, the electrode structure is not limited, but the density of the negative electrode active material present on the current collector is preferably 1 g·cm⁻³ or more, further preferably 1.2 g·cm⁻³ or more, particularly preferably 1.3 g·cm⁻³ or more, while preferably 2.2 g·cm⁻³ or less, more preferably 2.1 g·cm⁻³ or less, further preferably 2.0 g·cm⁻³ or less, particularly preferably 1.9 g·cm⁻³ or less. If the density of the negative electrode active material present on the current collector exceeds the above range, the negative electrode active material particles may be destroyed to induce increase in initial irreversible capacity or deterioration of high current density charge/discharge characteristics due to decrease in permeability to the electrolytic solution in the vicinity of the current collector/negative electrode active material interface. If the density thereof falls below the above range, the electrical conductivity between the negative electrode active materials may decrease, and the battery resistance may increase to reduce the capacity per unit volume.

The thickness of the negative electrode plate is designed in accordance with the positive electrode plate used and is not limited. The thickness of the mixture layer excluding the thickness of the metal foil of the core material is desirably usually 15 µm or more, preferably 20 µm or more, more preferably 30 µm or more, while usually 300 µm or less, preferably 280 µm or less, more preferably 250 µm or less.

The thickness ratio between the current collector and the negative electrode active material layer is not limited, but a value of (thickness of negative electrode active material layer on one surface immediately before injection of electrolytic solution)/(thickness of current collector) is preferably 20 or less, more preferably 15 or less, most preferably 10 or less, while preferably 0.5 or more, more preferably 0.8 or more, most preferably 1 or more. If the value exceeds this range, heat generation of the current collector due to Joule heat may occur during the high current density charging and discharging. If the value falls below this range, the volume ratio of the current collector to the negative electrode active material may increase to decrease the capacity of the battery.

The negative electrode may be one in which a substance different in compositional features from the above negative electrode plate is attached to the surface of the plate. Examples of the surface-attached substance include oxides such as aluminum oxide, silicon oxide, titanium oxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate and aluminum sulfate; and carbonates such as lithium carbonate, calcium carbonate and magnesium carbonate.

### <Positive electrode>

In the secondary battery of the present disclosure, the positive electrode is preferably composed of a positive electrode active material layer containing a positive electrode active material, and a current collector.

The positive electrode active material is not limited as long as the material can electrochemically occlude and release alkali metal ions. A preferred example thereof includes a material containing an alkali metal and at least one transition metal. Specific examples thereof include an alkali metal-containing transition metal composite oxide, an alkali metal-containing transition metal phosphate compound, a sulfur-based material, and a conductive polymer.

Particularly preferred among these as the positive electrode active material is an alkali metal-containing transition metal composite oxide that generates a high voltage. Examples of the alkali metal ion include a lithium ion, a sodium ion, and a potassium ion. In a preferred aspect, the alkali metal ion may be a lithium ion. In other words, in the present aspect, the alkali metal ion secondary battery is a lithium ion secondary battery.

Examples of the alkali metal-containing transition metal composite oxide include
lithium-manganese spinel composite oxides represented by
the formula: MaMn_{2-b}M¹_{b}O₄
wherein M is at least one metal selected from the group consisting of Li, Na, and K; 0.9 ≤ a; 0 ≤ b ≤ 1.5; M¹ is at least one metal selected from the group consisting of Fe, Co, Ni, Cu, Zn, Al, Sn, Cr, V, Ti, Mg, Ca, Sr, B, Ga, In, Si, and Ge;
lithium-nickel composite oxides represented by
the formula: MNi_{1-c}M²_{c}O₂
wherein M is at least one metal selected from the group consisting of Li, Na, and K; 0 ≤ c ≤ 0.5; M² is at least one metal selected from the group consisting of Fe, Co, Mn, Cu, Zn, Al, Sn, Cr, V, Ti, Mg, Ca, Sr, B, Ga, In, Si, and Ge; or
lithium-cobalt composite oxides represented by
the formula: MCo_{1-d}M³_{d}O₂
wherein M is at least one metal selected from the group consisting of, Li, Na, and K; 0 ≤ d ≤ 0.5; M³ is at least one metal selected from the group consisting of Fe, Ni, Mn, Cu, Zn, Al, Sn, Cr, V, Ti, Mg, Ca, Sr, B, Ga, In, Si, and Ge. In the above, M is preferably one metal selected from the group consisting of Li, Na, and K, more preferably Li or Na, further preferably Li.

In view of enabling a high-output secondary battery having a high energy density to be provided, preferred among these are MCoO₂, MMnO₂, MNiO₂, MMn₂O₄, MNi_{0.8}Co_{0.15}Al_{0.05}O₂, MNi_{1/3}Co_{1/3}Mn_{1/3}O₂, and the like. A compound represented by the following general formula (3) is preferred:

MNiₕCoᵢMnⱼM⁵ₖO₂ (3)

wherein M is at least one metal selected from the group consisting of Li, Na, and K, M⁵ represents at least one selected from the group consisting of Fe, Cu, Zn, Al, Sn, Cr, V, Ti, Mg, Ca, Sr, B, Ga, In, Si, and Ge, (h + i + j + k) = 1.0, 0 ≤ h ≤ 1.0, 0 ≤ i ≤ 1.0, 0 ≤ j ≤ 1.5, and 0 ≤ k ≤ 0.2.

Examples of the alkali metal-containing transition metal phosphate compound include a compound represented by the following formula (4):

MₑM⁴_{f} (PO₄)_{g}

wherein M is at least one metal selected from the group consisting of Li, Na, and K, M⁴ represents at least one selected from the group consisting of V, Ti, Cr, Mn, Fe, Co, Ni, and Cu, 0.5 ≤ e ≤ 3, 1 ≤ f ≤ 2, and 1 ≤ g ≤ 3. In the above, M is preferably one metal selected from the group consisting of Li, Na, and K, more preferably Li or Na, further preferably Li.

The transition metal of the lithium-containing transition metal phosphate compound is preferably V, Ti, Cr, Mn, Fe, Co, Ni, Cu, and the like. Specific examples thereof include iron phosphates such as LiFePO₄, Li₃Fe₂ (PO₄)₃, and LiFeP₂O₇, cobalt phosphates such as LiCoPO₄, and those obtained by substituting some of transition metal atoms as main components of these lithium transition metal phosphate compounds with another element such as Al, Ti, V, Cr, Mn, Fe, Co, Li, Ni, Cu, Zn, Mg, Ga, Zr, Nb, or Si.

The lithium-containing transition metal phosphate compound is preferably one having an olivine-type structure.

Other examples of the positive electrode active material include MFePO₄, MNi_{0.8}Co_{0.2}O₂, M_{1.2}Fe_{0.4}Mn_{0.4}O₂, MNi_{0.5}Mn_{1.5}O₂, MV₃O₆, and M₂MnO₃. Particularly, positive electrode active materials such as M₂MnO₃ and MNi_{0.5}Mn_{1.5}O₂ are preferred because the crystal structure thereof does not collapse in the case where a secondary battery is operated at a voltage higher than 4.4 V or a voltage of 4.6 V or higher. Accordingly, an electrochemical device such as the secondary battery including the positive electrode material containing the positive electrode active material exemplified above is preferred, because the remaining capacity is unlikely to decrease, the resistance increase rate is unlikely to change even under storage at a high temperature, and additionally the battery performance does not deteriorate even in operation at a high voltage.

Other examples of the positive electrode active material also include solid solution materials of M₂MnO₃ and MM⁶O₂, wherein M is at least one metal selected from the group consisting of Li, Na, and K, and M⁶ is a transition metal such as Co, Ni, Mn, Fe, or the like.

Examples of the solid solution material include an alkali metal manganese oxide represented by the general formula Mx[Mn_{(1-y)}M⁷_{y}]O_{z}. M in the formula here is at least one metal selected from the group consisting of Li, Na, and K, and M⁷ comprises M and at least one metal element other than Mn including one or two or more elements selected from the group consisting of Co, Ni, Fe, Ti, Mo, W, Cr, Zr, and Sn, for example. The x, y, and z values in the formula are in the ranges of 1 < x < 2, 0 ≤ y < 1, and 1.5 < z < 3, respectively. Preferred among these are manganese-containing solid solution materials obtained by solutionizing LiNiO₂ or LiCoO₂ in Li₂MnO₃ as a base, for example, Li_{1.2}Mn_{0.5}Co_{0.14}Ni_{0.14}O₂, because of enabling an alkali metal ion secondary battery having a high energy density to be provided.

Incorporation of lithium phosphate in the positive electrode active material is preferred because continuous charge characteristics are improved. Use of lithium phosphate is not limited, and the positive electrode active material and the lithium phosphate are preferably mixed for use. The lower limit of the amount of lithium phosphate to be used is preferably 0.1% by mass or more, more preferably 0.3% by mass or more, further preferably 0.5% by mass or more, and the upper limit thereof is preferably 10% by mass or less, more preferably 8% by mass or less, further preferably 5% by mass or less, with respect to the total of the positive electrode active material and lithium phosphate.

Examples of the above sulfur-based material may include materials containing a sulfur atom. At least one selected from the group consisting of simple sulfur, a metal sulfide, and an organosulfur compound is preferred, and simple sulfur is more preferred. The above metal sulfide may be a metal polysulfide. The above organosulfur compound may be an organic polysulfide.

Examples of the above metal sulfide include a compound represented by LiSₓ (0 < x ≤ 8); a compound represented by Li₂Sₓ (0 < x ≤ 8); a compound having a two-dimensional layered structure such as TiS₂ or MoS₂; and a Chevrel compound represented by the general formula MeₓMo₆S₈ (Me represents various transition metals, such as Pb, Ag, and Cu, 0 < x ≤ 8), which have a strong three-dimensional skeleton structure.

Examples of the above organosulfur compound include a carbon sulfide compound.

The organosulfur compound may be supported on a porous material such as carbon and thereby may be used as a carbon composite material. The content of sulfur contained in the carbon composite material is preferably 10 to 99% by mass, more preferably 20% by mass or more, further preferably 30% by mass or more, particularly preferably 40% by mass or more, while preferably 85% by mass or less, with respect to the carbon composite material, in view of further excellent cycle characteristics and further reduced overvoltage.

When the positive electrode active material is the above simple sulfur, the content of sulfur contained in the positive electrode active material is equivalent to the content of the above sulfur.

Examples of the conductive polymer include a p-doped conductive polymer and an n-doped conductive polymer. Examples of the conductive polymer include a polyacetylene-based polymer, a polyphenylene-based polymer, a heterocyclic polymer, an ionic polymer, a ladder-shaped polymer, and a network polymer.

One with a substance having a compositional feature different from that of the positive electrode active material attached to a surface of the positive electrode active material may be used. Examples of the substance attached to the surface include oxides such as aluminum oxide, silicon oxide, titanium oxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; carbonates such as lithium carbonate, calcium carbonate, and magnesium carbonate; and carbon.

Such a substance attached to the surface may be attached to a surface of the positive electrode active material by, for example, a method of dissolving or suspending the substance in a solvent, impregnating and adding the solution or suspension into the positive electrode active material, and drying the material; a method of dissolving or suspending a precursor of the substance attached to the surface in a solvent, impregnating and adding the solution or suspension into the positive electrode active material, and cause a reaction between the material and the precursor by heating or the like; a method of adding the substance to a precursor of the positive electrode active material and simultaneously sintering the materials; or the like. In the case of attaching carbon, for example, a carbonaceous material in the form of activated carbon may be mechanically attached to the surface afterward.

The lower limit of the amount of the substance attached to the surface is preferably 0.1 ppm or more, more preferably 1 ppm or more, further preferably 10 ppm or more, and the upper limit thereof is preferably 20% or less, more preferably 10% or less, further preferably 5% or less, in terms of mass, with respect to the positive electrode active material. The substance attached to the surface can suppress oxidation reaction of the electrolytic solution on the surface of the positive electrode active material, improving the battery life. However, an excessively small amount of the substance attached may fail to sufficiently provide this effect, and an excessively large amount thereof may hinder the entrance and exit of lithium ions, thereby increasing the resistance.

Examples of the shape of particles of the positive electrode active material include a bulky shape, a polyhedral shape, a spherical shape, an ellipsoidal shape, a plate shape, a needle shape, and a pillar shape, as conventionally used. Primary particles may agglomerate to form secondary particles.

The tap density of the positive electrode active material is preferably 0.5 g/cm³ or more, more preferably 0.8 g/cm³ or more, further preferably 1.0 g/cm³ or more. If the positive electrode active material has a tap density falling below the lower limit, the amount of a dispersion medium required may increase as well as the amounts of a conductive material and a binder required may increase in formation of the positive electrode active material layer. Then, the packing ratio of the positive electrode active material in the positive electrode active material layer is limited to result in limitation on the battery capacity in some cases. Use of a composite oxide powder having a high tap density enables a positive electrode active material layer having a high density to be formed. Generally the tap density is preferably as high as possible and has no particular upper limit. An excessively high tap density may cause diffusion of lithium ions through the electrolytic solution as the medium in the positive electrode active material layer to be a rate-controlling factor, and then, the load characteristics may be more likely to deteriorate. Accordingly, the upper limit thereof is preferably 4.0 g/cm³ or less, more preferably 3.7 g/cm³ or less, further preferably 3.5 g/cm³ or less.

In the present disclosure, the tap density is determined as a powder packing density (tap density) g/cm³ when 5 to 10 g of the positive electrode active material powder is packed into a 10-ml glass graduated cylinder and the cylinder is tapped 200 times with a stroke of about 20 mm.

The particles of the positive electrode active material have a median size d50 (or a secondary particle size when the primary particles agglomerate to form secondary particles) of preferably 0.3 µm or more, more preferably 0.5 µm or more, further preferably 0.8 µm or more, most preferably 1.0 µm or more, while preferably 30 µm or less, more preferably 27 µm or less, further preferably 25 µm or less, most preferably 22 µm or less. The median size falling below the lower limit may fail to provide a product having a high tap density. The median size greater than the upper limit may prolong diffusion of lithium in the particles. Thus, the battery performance may deteriorate, or in formation of the positive electrode for a battery, i.e., when the active material and components such as a conductive material and a binder are formed into slurry by adding a solvent and the slurry is applied in the form of a thin film, there may occur problems such as generation of streaks. Mixing two or more positive electrode active materials having different median sizes d50 can further improve packability in formation of the positive electrode.

In the present disclosure, the median size d50 is measured using a known laser diffraction/scattering particle size distribution measurement apparatus. In the case of using LA-920 manufactured by Horiba, Ltd. as the particle size distribution analyzer, the dispersion medium used in the measurement is a 0.1% by mass sodium hexametaphosphate aqueous solution, the measurement refractive index is set to 1.24 after 5-minute ultrasonic dispersion, and then measurement is performed.

When the primary particles agglomerate to form secondary particles, the average primary particle size of the positive electrode active material is preferably 0.05 µm or more, more preferably 0.1 µm or more, further preferably 0.2 µm or more. The upper limit thereof is preferably 5 µm or less, more preferably 4 µm or less, further preferably 3 µm or less, most preferably 2 µm or less. When the average primary particle size is larger than the upper limit, it is difficult to form spherical secondary particles. Then, the powder packability may be adversely affected, the specific surface area may significantly decrease, and thus the battery performance such as output characteristics may be highly likely to deteriorate. In contrast, when the average primary particle size falls below the lower limit, crystals are usually insufficiently grown, causing problems such as poor charge and discharge reversibility in some cases.

In the present disclosure, the primary particle size is measured by scanning electron microscopic (SEM) observation. Specifically, the primary particle size is determined by selecting 50 primary particles in a photograph at a magnification of 10,000×, measuring the maximum length between the left and right boundary lines of each primary particle along the horizontal line, and then, calculating the average value of the maximum lengths.

The BET specific surface area of the positive electrode active material is preferably 0.1 m²/g or more, more preferably 0.2 m²/g or more, further preferably 0.3 m²/g or more. The upper limit thereof is preferably 50 m²/g or less, more preferably 40 m²/g or less, further preferably 30 m²/g or less. If the BET specific surface area is smaller than this range, the battery performance is likely to deteriorate. If the BET specific surface area is larger than this range, the tap density is less likely to increase, and a problem may be likely to occur in the coating property in formation of the positive electrode active material layer.

In the present disclosure, the BET specific surface area is defined by a value measured by single point BET nitrogen adsorption method by a gas flow method using a surface area analyzer (e.g., fully automatic surface area measurement device, Ohkura Riken Co., Ltd.), a sample pre-dried in nitrogen stream at 150°C for 30 minutes, and then a nitrogen-helium gas mixture with the nitrogen pressure relative to the atmospheric pressure being accurately adjusted to 0.3.

When the secondary battery of the present disclosure is used as a large-size lithium ion secondary battery for hybrid vehicles or distributed generation, high output is required. Thus, the particles of the positive electrode active material are preferably mainly composed of secondary particles.

The particles of the positive electrode active material preferably include 0.5 to 7.0% by volume of fine particles having an average secondary particle size of 40 µm or less and having an average primary particle size of 1 µm or less. Incorporation of fine particles having an average primary particle size of 1 µm or less enlarges the contact area with the electrolytic solution and can accelerate diffusion of lithium ions between the electrode and the electrolytic solution, resulting in improvement in the output performance of the battery.

A method for producing the positive electrode active material to be used is a common method as a method for producing an inorganic compound. In particular, for production of a spherical or ellipsoidal active material, various methods can be contemplated. Such a method is exemplified in which a raw material substance of transition metal is dissolved or crushed and dispersed in a solvent such as water, the pH of the solution or dispersion is adjusted under stirring to form a spherical precursor, the precursor is recovered and, if necessary, dried, then, a Li source such as LiOH, Li₂CO₃, or LiNO₃ is added thereto, and the mixture is sintered at a high temperature, thereby providing an active material.

For production of the positive electrode, one of the positive electrode active materials described above may be used singly, or two or more such materials each having a different compositional feature may be used in any combination at any ratio. Preferred examples of the combination in this case include a combination of LiCoO₂ and LiMn₂O₄ or one in which part of Mn may be replaced by a different transition metal or the like, such as LiNi_{0.33}Co_{0.33}Mn_{0.33}O₂, and a combination with LiCoO₂ or one in which part of Co may be replaced by a different transition metal.

The content of the positive electrode active material is preferably 50 to 99.5% by mass, more preferably 80 to 99% by mass with respect to positive electrode mixture, in view of a high battery capacity.

The content of the positive electrode active material in the positive electrode active material layer is preferably 80% by mass or more, more preferably 82% by mass or more, particularly preferably 84% by mass or more. The upper limit is preferably 99% by mass or less, more preferably 98% by mass or less. An excessively small content of the positive electrode active material in the positive electrode active material layer may cause an insufficient electric capacity. In contrast, an excessively large content thereof may cause insufficient strength of the positive electrode.

The positive electrode active material layer preferably further contains a binder, a thickening agent, and a conductive material.

The binder to be used may be any material that is safe against a solvent to be used in production of the electrode and the electrolytic solution. Examples thereof include resin polymers such as polyethylene, polypropylene, polyethylene terephthalate, polymethyl methacrylate, aromatic polyamide, chitosan, alginic acid, polyacrylic acid, polyimide, cellulose, and nitro cellulose; rubbery polymers such as SBR (styrene-butadiene rubber), isoprene rubber, butadiene rubber, fluoroelastomers, NBR (acrylonitrile-butadiene rubber), and ethylene-propylene rubber; styrene-butadiene-styrene block copolymers and hydrogenated products thereof; thermoplastic elastomeric polymers such as EPDM (ethylene-propylene-diene terpolymers), styrene-ethylene-butadiene-styrene copolymers, and styrene-isoprene-styrene block copolymers and hydrogenated products thereof; soft resin polymers such as syndiotactic-1,2-polybutadiene, polyvinyl acetate, ethylene-vinyl acetate copolymers, and propylene-α-olefin copolymers; fluoropolymers such as polyvinylidene fluoride, polytetrafluoroethylene, vinylidene fluoride copolymer, and tetrafluoroethylene-ethylene copolymers; and polymer compositional features having ion conductivity of alkali metal ions (especially, lithium ions). One of these may be used singly, or two or more thereof may be used in any combination at any ratio.

The content of the binder, as the proportion of the binder in the positive electrode active material layer, is usually 0.1% by mass or more, preferably 1% by mass or more, further preferably 1.5% by mass or more, while usually 80% by mass or less, preferably 60% by mass or less, further preferably 40% by mass or less, most preferably 10% by mass or less. An excessively low proportion of the binder may fail to sufficiently hold the positive electrode active material and cause insufficient mechanical strength of the positive electrode, and the battery performance such as cycle characteristics may deteriorate. In contrast, an excessively high proportion thereof may cause reduction in battery capacity and conductivity.

Examples of the thickening agent include carboxymethyl cellulose, methyl cellulose, hydroxymethyl cellulose, ethyl cellulose, polyvinyl alcohol, oxidized starch, monostarch phosphate, casein, polyvinylpyrrolidone, and salts thereof. One of these may be used singly, or two or more thereof may be used in any combination at any ratio.

The proportion of the thickening agent with respect to the active material is in the range of usually 0.1% by mass or more, preferably 0.2% by mass or more, more preferably 0.3% by mass or more, while usually 5% by mass or less, preferably 3% by mass or less, more preferably 2% by mass or less. If the proportion falls below this range, the coating property may significantly deteriorate. If the proportion exceeds this range, the proportion of the active material in the positive electrode active material layer decreases, and there may be problems such as decrease in the capacity of the battery and increase in the resistance between the positive electrode active materials.

The conductive material to be used may be any known conductive material. Specific examples thereof include metal materials such as copper and nickel, and carbon materials such as graphite, including natural graphite and artificial graphite, carbon black, including acetylene black, Ketjen black, channel black, furnace black, lamp black, and thermal black, and amorphous carbon, including needle coke, carbon nanotube, fullerene, and VGCF. One of these may be used singly, or two or more thereof may be used in any combination at any ratio.

The conductive material to be used is contained in an amount of usually 0.01% by mass or more, preferably 0.1% by mass or more, more preferably 1% by mass or more, while usually 50% by mass or less, preferably 30% by mass or less, more preferably 15% by mass or less, in positive electrode active material layer. If the content thereof is smaller than this range, the electrical conductivity may become insufficient. In contrast, if the content thereof is larger than this range, the battery capacity may decrease.

The type of solvent for forming a slurry is not limited as long as the solvent can dissolve or disperse therein the positive electrode active material, the conductive material, and the binder, as well as a thickening agent used as appropriate. The solvent may be either an aqueous solvent or an organic solvent. Examples of the aqueous solvent include water and solvent mixtures of an alcohol and water. Examples of the organic solvent include aliphatic hydrocarbons such as hexane; aromatic hydrocarbons such as benzene, toluene, xylene, and methyl naphthalene; heterocyclic compounds such as quinoline and pyridine; ketones such as acetone, methyl ethyl ketone, and cyclohexanone; esters such as methyl acetate and methyl acrylate; amines such as diethylene triamine and N,N-dimethylaminopropylamine; ethers such as diethyl ether, propylene oxide, and tetrahydrofuran (THF); amides such as N-methylpyrrolidone (NMP), dimethyl formamide, and dimethyl acetamide; and aprotic polar solvents such as hexamethylphospharamide and dimethyl sulfoxide.

The amount of the solvent to be blended is determined taking into consideration coating property to the current collector, formation of a thin film after drying, and the like. The proportion between the binder and the solvent is preferably 0.5:99.5 to 20:80, by weight ratio.

Examples of the material of the current collector for a positive electrode include metal materials including metals such as aluminum, titanium, tantalum, stainless steel, and nickel, and alloys thereof; and carbon materials such as carbon cloth and carbon paper. Preferred among these are metal materials, especially aluminum or an alloy thereof.

In the case of a metal material, the current collector may be in the form of metal foil, metal cylinder, metal coil, metal plate, metal thin film, expanded metal, punched metal, metal foam, or the like. In the case of a carbon material, the current collector may be in the form of carbon plate, carbon thin film, carbon cylinder, or the like. Preferred among these is a metal thin film. The thin film may be in the form of mesh, as appropriate. The thin film may have any thickness, and the thickness is usually 1 µm or more, preferably 3 µm or more, more preferably 5 µm or more, while usually 1 mm or less, preferably 100 µm or less, more preferably 50 µm or less. If the thin film is thinner than the above range, the strength thereof may become insufficient required for a current collector. In contrast, if the thin film is thicker than this range, the handleability may be impaired.

Application of a conductive aid on the surface of the current collector is also preferred from the viewpoint of reduction in the electric contact resistance between the current collector and the positive electrode active material layer. Examples of the conductive aid include carbon and noble metals such as gold, platinum, and silver.

The ratio between the thicknesses of the current collector and the positive electrode active material layer is not limited. The value (thickness of positive electrode active material layer on one side immediately before injection of electrolytic solution)/(thickness of current collector) is in the range of preferably 20 or less, more preferably 15 or less, most preferably 10 or less, while preferably 0.5 or more, more preferably 0.8 or more, most preferably 1 or more. If the value exceeds this range, the current collector may generate heat due to Joule heating during high-current-density charge and discharge. If the value falls below this range, the ratio by volume of the current collector to the positive electrode active material increases, and the battery capacity may decrease.

The positive electrode may be produced by a usual method. An example of the production method includes a method in which the positive electrode active material is mixed with the above binder, thickening agent, conductive material, solvent, and the like to form a slurry-like positive electrode mixture, and then this mixture is applied to a current collector, dried, and pressed so as to enhance the density.

The density can be enhanced with a manual press, a roll press, or the like. The density of the positive electrode active material layer is in the range of preferably 1.5 g/cm³ or more, more preferably 2 g/cm³ or more, further preferably 2.2 g/cm³ or more, while preferably 5 g/cm³ or less, more preferably 4.5 g/cm³ or less, further preferably 4 g/cm³ or less. If the density exceeds this range, the permeability of the electrolytic solution toward the vicinity of the interface between the current collector and the active material decreases, charge and discharge characteristics deteriorate particularly at a high current density, and thus, high output may not be provided. If the density falls below the range, the electrical conductivity between the active materials may decrease, the battery resistance may increase, and thus, high output may not be provided.

The thickness of the positive electrode plate is not limited. From the viewpoint of a high capacity and high output, the thickness of the positive electrode active material layer on one side of the current collector excluding the thickness of the metal foil of the core material is, as the lower limit, preferably 10 µm or more, more preferably 20 µm or more, while preferably 500 µm or less, more preferably 450 µm or less.

There may be used a positive electrode plate onto a surface of which a substance having a compositional feature different from the positive electrode plate is attached. Examples of the substance attached to the surface include oxides such as aluminum oxide, silicon oxide, titanium oxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; carbonates such as lithium carbonate, calcium carbonate, and magnesium carbonate; and carbon.

### <Separator>

The secondary battery of the present disclosure preferably further comprises a separator.

The material or shape of the separator is not limited and known one may be used as long as the separator is stable to the electrolytic solution and excellent in a liquid-retaining ability. It is preferred to use a separator in the form of a porous sheet or a nonwoven fabric for which a resin, a glass fiber, inorganic matter, or the like is used and which has excellent liquid-retaining ability.

Examples of the material of a resin or glass-fiber separator that can be used include polyolefins such as polyethylene and polypropylene, aromatic polyamide, polytetrafluoroethylene, polyether sulfone, and glass filters. One of these materials may be used singly or two or more of these may be used in any combination at any ratio, for example, in the form of a polypropylene/polyethylene bilayer film or a polypropylene/polyethylene/polypropylene trilayer film.

Among these, the above separator is preferably a porous sheet or a nonwoven fabric formed from a polyolefin such as polyethylene or polypropylene as the raw material, in view of favorable permeability of the electrolytic solution and a favorable shut-down effect.

The separator may have any thickness, and the thickness is usually 1 µm or more, preferably 5 µm or more, further preferably 8 µm or more, while usually 50 µm or less, preferably 40 µm or less, further preferably 30 µm or less. If the separator is excessively thinner than the above range, the insulation and mechanical strength may decrease. If the separator is excessively thicker than the above range, not only the battery performance such as rate characteristics may deteriorate but also an energy density of the whole electrolytic solution battery may decrease.

When a separator which is a porous one such as a porous sheet or a nonwoven fabric is used, the separator may have any porosity. The porosity is usually 20% or more, preferably 35% or more, further preferably 45% or more, while usually 90% or less, preferably 85% or less, more preferably 75% or less. If the porosity is excessively smaller than the above range, the film resistance may increase, and the rate characteristics tends to deteriorate. If the porosity is excessively larger than the above range, the mechanical strength of the separator may decrease, and the insulation tends to decrease.

The separator may have any average pore size, and the average pore size is usually 0.5 µm or less, preferably 0.2 µm or less, while usually 0.05 µm or more. If the average pore size exceeds the above range, short circuits easily occur. If the average pore size falls below the above range, the film resistance may increase, and the rate characteristics may deteriorate.

Meanwhile, examples of the inorganic matter to be used include oxides such as alumina and silicon dioxide, nitrides such as aluminum nitride and silicon nitride, and sulfates such as barium sulfate and calcium sulfate, each in the form of particles or fibers.

The separator is used in the form of a thin film such as a nonwoven fabric, a woven fabric, or a microporous film. The thin film form to be used suitably has a pore size of 0.01 to 1 µm and a thickness of 5 to 50 µm. Other than the above separate thin film form, a separator may be used in which a composite porous layer containing particles of the above inorganic matter is formed on a surface layer of the positive electrode and/or negative electrode using a resin binder.

For example, alumina particles having a 90% particle size of smaller than 1 µm may be employed to form a porous layer on both the surfaces of the positive electrode using fluororesin as a binder.

### <Electrolytic solution>

In the secondary battery of the present disclosure, a non-aqueous electrolytic solution is preferably used as the electrolytic solution. The non-aqueous electrolytic solution may be a solution in which a known electrolyte salt is dissolved in a known organic solvent for dissolving an electrolyte salt.

The organic solvent for dissolving an electrolyte salt is not limited, and one or more of known hydrocarbon-based solvents such as propylene carbonate (PC), ethylene carbonate (EC), butylene carbonate, γ-butyrolactone, 1,2-dimethoxyethane, 1,2-diethoxyethane, dimethyl carbonate, diethyl carbonate (DEC), ethyl methyl carbonate (EMC), and propion propionate (PrPr); and fluorinated solvents such as fluoroethylene carbonate, fluoroether, and fluorinated carbonate.

Examples of the electrolyte salt include LiClO₄ LiAsF₆, LiBF₄, LiPF₆, LiN(SO₂CF₃)₂, and Lin(SO₂C₂F₅)₂, and from the viewpoint of good cycle characteristics, LiPF₆, LiBF₄, LiN(SO₂CF₃)₂, LiN(SO₂C₂F₅), or a combination thereof is preferred.

The concentration of the electrolyte salt needs to be 0.8 mol/L or more, further 1.0 mol/L or more. The upper limit is usually 1.5 mol/L though it depends on the organic solvent for dissolving an electrolyte salt.

In the secondary battery of the present disclosure, a gel electrolyte may be used. The gel electrolyte is not limited, and materials contained in a composition for forming a conventional gel electrolyte layer, such as an electrolyte, a solvent, and a gel matrix, may be used.

Examples of the electrolyte include those mentioned above as examples. Specific examples thereof include lithium salts such as Li(CF₃SO₂)₂N, Li(C₂F₅SO₂)₂N, LiPF₆, LiBF₄, LiAsF₆, LiTaF₆, LiClO₄, and LiCF₃SO₃.

Examples of the solvent include the carbonate-based organic solvents mentioned above.

Examples of the gel matrix (matrix polymer) include polyethylene oxide (PEO), polypropylene oxide (PPO), PVDF, PVDF-HFP, polyethylene glycol (PEG), polyacrylonitrile (PAN), and polymethyl methacrylate (PMMA).

### <Battery Design>

The secondary battery using the battery exterior body of the present disclosure is particularly preferably a thin type battery such as a laminate type battery. In appearance of the laminate type battery, battery constituent materials are stored in a battery case, and part of an electrode terminal is allowed to protrude outside the battery. Regarding the state of the stored battery constituent materials, the battery exterior body includes an electromotive unit cell and part of an electrode terminal extended from the cell, and the portion between the electrode terminal protruding outside the battery exterior body and the electrode terminal inside the battery exterior body is closely bonded in a heat seal part to form a hermetically sealed state during formation of the battery exterior body. The electrode terminal is allowed to protrude outside the exterior body, and therefore, in order that the battery exterior body may ensure sealing as an exterior body, part of the electrode terminal is thermally bonded to the heat-sealing resin at the heat seal part of the exterior body.

By making the fluororesin film of the present disclosure serve as the heat seal part of the innermost layer, they themselves have thermal bonding property to each other and simultaneously have good thermal bonding property also to the electrode terminal formed from a conductive material such as copper foil or aluminum foil that is a material for forming the electrode terminal.

The present disclosure also provides a secondary battery in which the fluororesin film of the above battery exterior body is present at a position in contact with the electrolytic solution.

The fluororesin film of the present disclosure is stable to the electrolytic solution, and therefore, in the secondary battery, by making the fluororesin film of the present disclosure serve as the innermost layer of the battery exterior body and by allowing the fluororesin film of the present disclosure to be in contact with the electrolytic solution, the secondary battery can exert the effect of electrolytic solution permeation resistance more effectively.

The method for producing the laminate type battery is not limited, and may be, for example, the following method. As an element of a large size laminate type lithium ion battery, an element in which a positive electrode, a negative electrode, and a separator are combined in the form of a laminate is produced. Generally, a combination of 20 to 40 of each of positive and negative electrodes becomes one element.

Subsequently, tabs are attached to the above element. The tabs come out from both ends in some cases, or the tabs come out from the same side in some cases.

Then, the element is interposed by the sheet-like exterior body from both sides of the element, and the exterior body is sealed. In this case, in order to inject the electrolytic solution, one side may be kept open without being sealed so that the electrolytic solution can be injected therethrough, or the laminate material may be originally made to have such a shape as enables easy injection (for example, an injection port is provided) so that the electrolytic solution can be injected therethrough.

Next, the injection part is also sealed, and thus, a laminate type battery is obtained.

### Examples

Hereinafter, the present disclosure will be specifically described with reference to Examples. However, the present invention is not intended to be limited to the following Examples.

### (Polymer Compositional Features)

The polymer compositional features were measured by 19F-NMR analysis.

### (Melting Point)

The melting point was calculated from the melting peak measured when the temperature was increased at a rate of 10°C/min using a DSC apparatus.

### (Glass Transition Temperature)

The glass transition temperature was calculated from the tanδ peak measured when the temperature was increased at a rate of 5°C/min at a frequency of 10 Hz and a strain of 0.1% using a solid dynamic mechanical analyzer (DMA).

### (Melt Flow Rate (MFR))

The melt flow rate was measured in accordance with ASTM D3307 under the conditions of a temperature of 372°C and a load of 5.0 kg.

### (Thickness of Fluororesin Film)

The thickness of the fluororesin film was measured using a micrometer gauge.

### (Oxygen Element Ratio of Fluororesin Film Surface)

A sample film was subjected to heat treatment of 180°C × 3 minutes, then a surface state on one or both surfaces of the film was measured by a scanning X-ray photoelectron spectrometer (XPS/ESCA) PHI 5000 VersaProbe II (manufactured by ULVAC-PHI INCORPORATED) using monochromatic AlKα rays as X-ray source at an incidence angle of 45°C, and an oxygen element ratio that was a proportion of oxygen to fluorine, carbon, oxygen and nitrogen was calculated.

When the following oxygen element ratio difference in the depth direction was determined, the oxygen element ratio of the fluororesin film surface was calculated without performing heat treatment of 180°C × 3 minutes.

### (Oxygen Element Ratio Difference in Depth Direction)

A sample film was subjected to etching using an argon gas cluster ion beam at an incidence angle of 45° under the sputtering conditions of 2.5 kV × 10 nA in the depth direction for 15 minutes, then analysis was conducted under the aforementioned conditions to calculate an oxygen element ratio, and a difference from the aforementioned oxygen element ratio of the fluororesin film surface was taken.

### (Rate of Dimensional Change)

On a film sample cut into 300 mm square, gage marks were put in each of MD and TD at an interval of 180 mm, then the sample was placed on a metal plate with a PTFE-impregnated glass cloth and was subjected to heat treatment for 10 minutes in an electric furnace set to 180°C under air atmosphere without applying a load, thereafter the film was cooled down to 25°C (allowed to stand in a room at 25°C for 30 minutes or more), then an interval between the gage marks in each of the MD and the TD of the film was measured using a caliper (unit: mm, measurable to the second decimal place), and the rate of dimensional change was calculated from a change of the interval between the gage marks before and after the heat treatment, using the following calculation formula. Thermal shrinkage rate = {(length after heat treatment - length before heat treatment)/length before heat treatment} × 100 (%)

### (Wrinkles after Annealing)

The presence of wrinkles was confirmed by visual observation.
Good (indicated by circle symbol (o)): No occurrence of film deformation (waving)
Poor (indicated by cross symbol (x)): Occurrence of film deformation (waving)

### (Wrinkles of roll film)

After the film was wound into a roll, it was stored for 1 month at room temperature, and thereafter the appearance was visually judged.
Good (indicated by circle symbol (o)): No occurrence and no increase of wrinkles due to tight winding
Poor (indicated by cross symbol (x)): Occurrence and increase of wrinkles due to tight winding

### (Adhesion Strength between Fluororesin Films)

A sample produced by superposing fluororesin films on each other with their surface-treated surfaces facing each other and pressing them with a heat press (200°C/0.2 MPa/120 s) was cut into a strip having a width of 10 mm, then using a Tensilon universal testing machine (manufactured by Shimadzu Corporation), non-adhered portions of the strip sample were grabbed with upper and lower chucks of the Tensilon machine and pulled at a rate of 100 mm/min to measure a peel strength, and the resulting value was defined as an adhesion strength.

### (Electrolytic Solution Permeability of Fluororesin Film)

A film (resin film layer) to be evaluated on permeability was cut to a diameter of 6 cm and interposed between two pieces of glassware, as shown in Figure 1 (in Figure 1, numeral 3 designates a film to be evaluated). One chamber 2 of the glassware was filled with 200 mL of 2-propanol, and the other chamber 4 was filled with 200 mL of an electrolytic solution obtained by adding LiPF₆ to a solution consisting of ethylene carbonate, fluoroethylene carbonate and dimethyl carbonate at a volume ratio of 20/10/70 so that the concentration reached 1.2 mol/L, and the two chambers were each closed with a tight stopper. The whole of the glassware was immersed in a hot bath 1 at 60°C, then after the lapse of 30 days, 2-propanol was sampled, and the quantity of the electrolytic solution that had permeated the resin film layer was determined by gas chromatography. As the electrolytic solution permeability, a permeation amount (g) per unit area (m²) per day was calculated.

### (Adhesion Strength to Aluminum Foil)

8079 Aluminum foil (manufactured by Toyo Aluminum K.K., thickness: 40 µm), a film, and 8079 aluminum foil were superposed in the order of aluminum foil/film/aluminum foil so that a surface-treated surface of the film and the aluminum foil came into contact with each other, then using a vacuum heat press (model number: MKP-1000HVWH-S7, manufactured by MIKADO TECHNOS CO., LTD.), they were hot-pressed under the conditions of a press temperature of 320°C, a preheating time of 60 seconds, an applied pressure of 1.5 MPa, and a pressure time of 300 seconds to bond them, then to one surface of a laminate produced by the vacuum heat press, an aluminum plate was attached with a pressure-sensitive adhesive tape, then using a Tensilon universal testing machine (manufactured by Shimadzu Corporation), the aluminum foil having a width of 10 mm was grabbed and pulled at a rate of 50 mm/min in the direction of 90° against the plane of the laminate to measure a peel strength of the aluminum foil, and the resulting value was defined as an adhesion strength.

### (Sample 1)

On both surfaces of a 50 µm thick long roll film obtained by subjecting PFA (TFE/PPVE copolymer, compositional features: TFE/PPVE=98.4/1.6 (% by mol), MFR: 15.8 g/10 min, melting point: 305°C) as a fluororesin to melt extrusion forming by a T-die method and winding it, surface treatment (while allowing nitrogen gas containing 0.50% by volume of vinyl acetate to flow in the vicinity of a discharge electrode and a rolled earth electrode of a corona discharge apparatus, the film was continuously passed along the rolled earth electrode to perform corona discharge treatment on both surfaces of the film with a discharge amount of 1324 W·min/m²) was conducted, and the surface-treated long film was wound up into a roll. The surface oxygen element ratio of the surface-treated film from the ESCA surface analysis was 20.42 atomic%. The glass transition temperature of this film was 92°C.

### (Sample 2)

A 50 µm thick long roll film was obtained by subjecting FEP (TFE/HFP copolymer, compositional features: TFE/HFP=93.2/6.8 (% by mol), MFR: 7.5 (g/10 min), melting point: 270 (°C)) produced by the production method of Comparative Example 5 in Japanese Patent Publication No. 57-040847 to melt extrusion forming by a T-die method and winding it. On both surfaces of this long roll film, surface treatment (while allowing nitrogen gas containing 0.50% by volume of vinyl acetate to flow in the vicinity of a discharge electrode and a rolled earth electrode of a corona discharge apparatus, the film was continuously passed along the rolled earth electrode to perform corona discharge treatment on both surfaces of the film with a discharge amount of 1324 W·min/m²) was conducted, and the surface-treated long film was wound up into a roll. The surface oxygen element ratio of the surface-treated film from the ESCA surface analysis was 19.87 atomic%. The glass transition temperature of this film was 81°C.

### (Sample 3)

A sample of a 50 µm thick film both surfaces of which had been surface-treated was obtained in the same manner as for the sample 2 except for changing the discharge amount to 265 W·min/m². The surface oxygen element ratio of the surface-treated film from the ESCA surface analysis was 10.21 atomic%.

### (Sample 4)

A sample of a 50 µm thick film both surfaces of which had been surface-treated was obtained in the same manner as for the sample 2 except for changing the discharge amount to 132 W·min/m². The surface oxygen element ratio of the surface-treated film from the ESCA surface analysis was 4.33 atomic%.

### (Sample 5)

A sample of a 50 µm thick film both surfaces of which had been surface-treated was obtained in the same manner as for the sample 2 except for changing the discharge amount to 66 W·min/m². The surface oxygen element ratio of the surface-treated film from the ESCA surface analysis was 2.61 atomic%.

### (Sample 6)

A commercially available unstretched polypropylene film for a thermal fusion bonding layer (CT P1146 manufactured by TOYOBO CO., LTD., film thickness: 50 µm) was purchased.

The results of the above samples 1 to 6 are shown in Table 1.

**[Table 1]**

| | Resin type | Discharge amount | Oxygen element ratio by ESCA measurement |
|---|---|---|---|
| | | W·min/m² | % |
| Sample 1 | PFA | 1324 | 20.42 |
| Sample 2 | FEP | 1324 | 19.87 |
| Sample 3 | FEP | 265 | 10.21 |
| Sample 4 | FEP | 132 | 4.33 |
| Sample 5 | FEP | 66 | 2.61 |
| Sample 6 | PP | - | - |

### (Example 1)

Using the film of the sample 1, electrolytic solution permeability of a resin film was evaluated, and the result was 18 g/m²·day.

### (Example 2)

Using the film of the sample 2, electrolytic solution permeability of a resin film was evaluated, and the result was 7 g/m²·day.

### (Comparative Example 1)

Using the film of the sample 6, electrolytic solution permeability of a resin film was evaluated, and the result was 2597 g/m²·day.

The results of Examples 1 and 2, and Comparative Example 1 are shown in Table 2.

**[Table 2]**

| | Example 1 | Example 2 | Comparative Example 1 |
|---|---|---|---|
| Resin film used | Sample 1 | Sample 2 | Sample 6 |
| Electrolytic solution permeability of resin film (g/m²·day) | 18 | 7 | 2597 |

It can be seen from the results described above that the fluororesin film is superior in electrolytic solution permeation resistance to the unstretched polypropylene film for use as a thermal fusion bonding layer of an existing exterior body for a battery. Moreover, it can be seen that FEP is superior in electrolytic solution permeation resistance to PFA.

### (Example 3)

The film of the sample 1 was passed through an annealing furnace (air atmosphere) at 180°C on Roll-to-Roll system, cooled in a cooling zone, and wound up into a rolled long film. At this time, the presence of deformation (waving) of the film after annealing was visually evaluated. Next, a sample film cut from this long roll film was placed in an electric furnace at 180°C, heat-treated for 10 minutes, and then cooled down to room temperature. The rate of dimensional change in MD and TD was measured, and the absolute value thereof was determined. The film wound around a core was stored for 1 month at room temperature, and evaluation of tight winding was conducted.

### (Example 4)

Annealing treatment and subsequent evaluation of the presence of film deformation (waving), measurement of a rate of dimensional change, and evaluation of tight winding were conducted in the same manner as in Example 3 except for using the film of the sample 2.

### (Example 5)

Annealing treatment and subsequent evaluation of the presence of film deformation (waving), measurement of a rate of dimensional change, and evaluation of tight winding were conducted in the same manner as in Example 4 except for changing the temperature of the annealing furnace to 200°C.

### (Example 6)

Annealing treatment and subsequent evaluation of the presence of film deformation (waving), measurement of a rate of dimensional change, and evaluation of tight winding were conducted in the same manner as in Example 3 except for using the film of the sample 3.

### (Example 7)

Annealing treatment and subsequent evaluation of the presence of film deformation (waving), measurement of a rate of dimensional change, and evaluation of tight winding were conducted in the same manner as in Example 3 except for using the film of the sample 4.

### (Example 8)

Annealing treatment and subsequent evaluation of the presence of film deformation (waving), measurement of a rate of dimensional change, and evaluation of tight winding were conducted in the same manner as in Example 4 except for using the film of the sample 5.

### (Example 9)

Annealing treatment and subsequent evaluation of the presence of film deformation (waving), measurement of a rate of dimensional change, and evaluation of tight winding were conducted in the same manner as in Example 4 except that the cooling zone was not inserted into the annealing process.

### (Comparative Example 2)

Annealing treatment and subsequent evaluation of the presence of film deformation (waving), measurement of a rate of dimensional change, and evaluation of tight winding were conducted in the same manner as in Example 4 except for changing the temperature of the annealing furnace to 250°C.

### (Comparative Example 3)

Regarding the sample 2 subjected to no annealing treatment, measurement of a rate of dimensional change and evaluation of tight winding were conducted.

The results of Examples 3 to 9, and Comparative Examples 2 to 3 are shown in Table 3.

**[Table 3]**

| | | Example 3 | Example 4 | Example 5 | Example 6 | Example 7 | Example 8 | Example 9 | Comparative Example 2 | Comparative Example 3 |
|---|---|---|---|---|---|---|---|---|---|---|
| Resin film used | | Sample 1 | Sample 2 | Sample 2 | Sample 3 | Sample 4 | Sample 5 | Sample 2 | Sample 2 | Sample 2 |
| Annealing temperature (°C) | | 180 | 180 | 200 | 180 | 180 | 180 | 180 | 250 | - |
| Annealing time (min) | | 5 | 5 | 5 | 5 | 5 | 5 | 5 | 5 | - |
| Cooling zone | | present | present | present | present | present | present | absent | present | - |
| Film deformation judgement | | ○ | ○ | ○ | ○ | ○ | ○ | × | ○ | - |
| Rate of dimensional change (%) | MD | 0.83 | 0.87 | 1.21 | 0.73 | 0.82 | 0.85 | 0.87 | 2.11 | 2.22 |
| | TD | 0.36 | 0.41 | 0.72 | 0.42 | 0.75 | 0.71 | 0.46 | 0.53 | 1.13 |
| Tight winding judgement | | ○ | ○ | ○ | ○ | ○ | ○ | - | × | × |

It can be seen from the results in Table 3 that by adjusting the conditions of the annealing treatment and by adjusting the absolute value of the rate of dimensional change after the heat treatment of 180°C × 10 minutes to 2% or less, tight winding due to change over time can be suppressed. Moreover, it can be seen from Comparative Example 2 that in the case where the cooling zone was not inserted into the annealing process, the film was deformed (waved) when the roll film after annealing was unwound, and tight winding was unable to be evaluated. In this state, defects occur during the process to laminate the film to aluminum foil or the like, and accordingly, it is preferred to insert a cooling process into the annealing process.

### (Example 10)

The film subjected to annealing treatment in Example 3 (sample 1: 180) was cut into 100 mm square, and the film was placed on a metal tray, then introduced in an electric furnace (air atmosphere) at 180°C and heat-treated for 3 minutes. Using this film, a surface on the side that had been in contact with air during the heat treatment was analyzed by ESCA.

Next, the heat-treated fluororesin film and 8079 aluminum foil (manufactured by Toyo Aluminum K.K., thickness: 40 µm) were superposed so that the same surface as the surface-analyzed surface of the heat-treated fluororesin film and the aluminum foil came into contact with each other, and using a vacuum heat press (model number: MKP-1000HVWH-S7, manufactured by MIKADO TECHNOS CO., LTD.), they were hot-pressed under the conditions of a press temperature of 320°C, a preheating time of 60 seconds, an applied pressure of 1.5 MPa, and a pressure time of 300 seconds to bond them, and using a Tensilon universal testing machine, they were peeled at 90° to measure an adhesion strength.

### (Example 11)

Surface analysis by ESCA and measurement of an adhesion strength were conducted in the same manner as in Example 10 except for using the film subjected to annealing treatment in Example 4 (sample 2: 180).

### (Example 12)

The analysis of the surface of the film subjected to annealing treatment in Example 6 (sample 3: 180) by ESCA resulted in an oxygen element ratio of 8.12 atomic%. Further, the film was subjected to etching for 15 minutes in the depth direction using an argon gas cluster ion beam at an incidence angle of 45° under the sputtering conditions of 2.5 kV × 10 nA, and thereafter, the ESCA analysis of the surface resulted in an oxygen element ratio of 0.91 atomic%. The difference between these two results was 7.21 atomic%. The adhesion strength between this film subjected to annealing treatment and the aluminum foil was 968 N/m, and the adhesion strength between the film treated surfaces was 237 N/m.

Next, the film subjected to annealing treatment in Example 6 (sample 3: 180) was cut into 100 mm square, and the film was placed on a metal tray, then introduced in an electric furnace (air atmosphere) at 180°C and heat-treated for 3 minutes. Using this film, a surface on the side that had been in contact with air during the heat treatment was analyzed by ESCA.

Next, the heat-treated fluororesin film and 8079 aluminum foil (manufactured by Toyo Aluminum K.K., thickness: 40 µm) were superposed so that the same surface as the surface-analyzed surface of the heat-treated fluororesin film and the aluminum foil came into contact with each other, and using a vacuum heat press (model number: MKP-1000HVWH-S7, manufactured by MIKADO TECHNOS CO., LTD.), they were hot-pressed under the conditions of a press temperature of 320°C, a preheating time of 60 seconds, an applied pressure of 1.5 MPa, and a pressure time of 300 seconds to bond them, and using a Tensilon universal testing machine, they were peeled at 90° to measure an adhesion strength.

### (Example 13)

Surface analysis by ESCA and measurement of an adhesion strength were conducted in the same manner as in Example 10 except for using the film subjected to annealing treatment in Example 7 (sample 4: 180).

### (Comparative Example 4)

The film of the sample 5 was passed through an annealing furnace (air atmosphere) at 180°C on Roll-to-Roll system, cooled in a cooling zone, and wound up into a rolled long film. The oxygen element ratio of the film surface after the annealing was 1.69%. Further, the film was subjected to etching for 15 minutes in the depth direction using an argon gas cluster ion beam at an incidence angle of 45° under the sputtering conditions of 2.5 kV × 10 nA, and thereafter, the ESCA analysis of the surface resulted in an oxygen element ratio of 0.84 atomic%. The difference between these two results was 0.85 atomic%.

Next, heat treatment of 180°C × 3 minutes, surface analysis and measurement of an adhesion strength to aluminum foil were conducted in the same manner as in Example 11. The oxygen element ratio of the film surface after the heat treatment was 1.28%, and the adhesion strength to the aluminum foil was 650 N/mm.

### (Comparative Example 5)

Both surfaces of a 50 µm thick film obtained by melt extrusion forming through a T-die method similarly to the sample 2 were subjected to surface treatment by discharge treatment using no organic compound-containing inert gas. This film was passed through an annealing furnace (air atmosphere) at 180°C on Roll-to-Roll system, cooled in a cooling zone, and wound up into a roll. The oxygen element ratio of the film surface after the annealing was 4.01%. The adhesion strength between the film treated surfaces was 26 N/m. Next, heat treatment of 180°C × 3 minutes, surface analysis and measurement of an adhesion strength to aluminum foil were conducted in the same manner as in Example 11. The oxygen element ratio of the film surface after the heat treatment was 0.88%, and the adhesion strength to the aluminum foil was 142 N/mm.

The results of Examples 10 to 13, and Comparative Examples 4 and 5 are shown in Table 4.

**[Table 4]**

| | | Example 10 | Example 11 | Example 12 | Example 13 | Comparative Example 4 | Comparative Example 5 |
|---|---|---|---|---|---|---|---|
| | | Sample 1 180°C | Sample 2 180°C | Sample 3 180°C | Sample 4 180°C | Sample 5 180°C | Sample 2 Corona treatment using no gas |
| Resin film used | | Example 3 | Example 4 | Example 6 | Example 7 | - | - |
| Evaluation before heat treatment (after annealing) | Surface oxygen element ratio (atomic%) | - | - | 8.12 | - | 1.69 | 4.01 |
| | Oxygen element ratio difference in depth direction (atomic%) | - | - | 7.21 | - | 0.85 | - |
| | Adhesion strength between fluororesin films (N/m) | - | - | 237 | - | - | 26 |
| | Adhesion strength to aluminum foil (N/m) | - | - | 968 | - | - | - |
| Evaluation after heat treatment | Surface oxygen element ratio (atomic%) | 11.84 | 10.34 | 6.04 | 2.65 | 1.28 | 0.88 |
| | Adhesion strength to aluminum foil (N/m) | 1280 | 1255 | 834 | 733 | 650 | 142 |

It can be seen from the results in Table 4 that by adjusting the oxygen element ratio of the film surface after the heat treatment of 180°C × 3 minutes to 1.35 atomic% or more, an adhesion strength to the aluminum foil of 500 N/m or more can be obtained. Particularly in the case of surface treatment using the organic compound-containing inert gas of the present disclosure, inactivation due to heat less occurs, and such an inert gas is suitably used. From the above, the fluororesin film in the present invention can obtain sufficient adhesion strength even if it is preheated in advance and then laminated to aluminum foil in the aluminum foil lamination process or the like.

### (Example 14)

The film subjected to annealing treatment in Example 3 (sample 1: 180) and 8079 aluminum foil (manufactured by Toyo Aluminum K.K., thickness: 40 µm) were superposed so that the surface-treated surface of the film and the aluminum foil came into contact with each other, and using a vacuum heat press (model number: MKP-1000HVWH-S7, manufactured by MIKADO TECHNOS CO., LTD.), they were hot-pressed under the conditions of a press temperature of 320°C, a preheating time of 60 seconds, an applied pressure of 1.5 MPa, and a pressure time of 300 seconds to bond them, thereby producing a laminate. From this laminate, two laminates each having a square shape of 10 cm × 10 cm were cut out, they were superposed so that their resin layers faced each other, and three sides were heat-sealed with an impulse heat sealer at 270°C at a pressure of 0.2 MPa for a compression bonding time of 120 seconds with a seal width of 5 mm. Into the resulting bag structure, 5 mL of an electrolytic solution, which had been obtained by adding LiPF₆ to a solution consisting of ethylene carbonate, fluoroethylene carbonate, and dimethyl carbonate at a volume ratio of 20/10/70 so that the concentration reached 1.2 mol/L, was added through the unsealed side, and the unsealed side was sealed with a clip. Turning the side opposite to the unsealed side down, the bag structure was placed in a 2-propanol bath for 90 days so that a portion of 1 cm from the bottom of the bag structure was immersed in the 2-propanol, then the amount of the electrolytic solution eluted into the n-propanol was determined, and thus, as the electrolytic solution permeability through the heat seal part, a permeation amount (g) per month (30 days) was calculated.

### (Example 15)

Evaluation of electrolytic solution permeability through the heat seal part was conducted in the same manner as in Example 14 except for using the film subjected to annealing treatment in Example 4 (sample 2: 180).

### (Comparative Example 6)

Evaluation of electrolytic solution permeability through the heat seal part was conducted in the same manner as in Example 12 except that a commercially available aluminum laminate film for a battery (D-EL40H manufactured by Dai Nippon Printing Co., Ltd.) using a polypropylene film as a thermal fusion bonding layer was used, from this laminate, two laminates each having a square shape of 10 cm × 10 cm were cut out, they were superposed so that the thermal fusion bonding layers faced each other, and three sides were heat-sealed with an impulse heat sealer (FCB-200 manufactured by FUJI IMPULSE CO., LTD.) at 200°C for a compression bonding time of 3 seconds with a seal width of 5 mm.

The results of Examples 14 and 15, and Comparative Example 6 are shown in Table 5.

**[Table 5]**

| | Example 14 | Example 15 | Comparative Example 6 |
|---|---|---|---|
| Electrolytic solution permeability of resin film (g/month) | 1.22 | 0.75 | 3.76 |

It can be seen from Table 5 that the laminate using a fluororesin film as a thermal fusion bonding layer can effectively suppress permeation of the electrolytic solution through the heat seal part. As can be seen from the results of Example 1 and 2 and Comparative Example 1 (Tables 2 and 3), this is thought to be due to low electrolytic solution permeability of the fluororesin that is in direct contact with the electrolytic solution.

### (Production of battery exterior body)

### (Example 16)

The film subjected to annealing treatment in Example 4 (sample 2: 180) and 8079 aluminum foil (manufactured by Toyo Aluminum K.K., thickness: 40 µm) were superposed so that the surface-treated surface of the film and the aluminum foil came into contact with each other, and using a vacuum heat press (model number: MKP-1000HVWH-S7, manufactured by MIKADO TECHNOS CO., LTD.), they were hot-pressed under the conditions of a press temperature of 320°C, a preheating time of 60 seconds, an applied pressure of 1.5 MPa, and a pressure time of 300 seconds to bond them, thereby producing a laminate. From this laminate, a piece having a width of 125 mm and a length of 140 mm was cut out to provide a battery exterior body.

### (Example 17)

An unstretched polypropylene film (CT P1146 manufactured by TOYOBO CO., LTD., film thickness: 50 µm) and a laminate produced in the same manner as in Example 16 were superposed so that a surface-treated surface of the film and a surface of the laminate where aluminum was exposed came into contact with each other, and using a vacuum heat press (model number: MKP-1000HVWH-S7, manufactured by MIKADO TECHNOS CO., LTD.), they were hot-pressed under the conditions of a press temperature of 180°C, a preheating time of 30 seconds, an applied pressure of 1.5 MPa, and a pressure time of 300 seconds to bond them, thereby producing a laminate consisting of three layers of polypropylene film/aluminum foil/FEP film. From this laminate, a piece having a width of 125 mm and a length of 140 mm was cut out to provide a battery exterior body.

### (Example 18)

8079 Aluminum foil (manufactured by Toyo Aluminum K.K., thickness: 40 µm), the film subjected to annealing treatment in Example 4 (sample 2: 180), a polyimide film dried at 120°C for 12 hours (100H manufactured by DU PONT-TORAY CO., LTD., film thickness: 25 µm), and the film subjected to annealing treatment in Example 4 (sample 2: 180) were superposed in this order, and using a vacuum heat press (model number: MKP-1000HVWH-S7, manufactured by MIKADO TECHNOS CO., LTD.), they were hot-pressed under the conditions of a press temperature of 275°C, a preheating time of 180 seconds, an applied pressure of 1.5 MPa, and a pressure time of 420 seconds to bond them, thereby producing a laminate. From this laminate, a piece having a width of 125 mm and a length of 140 mm was cut out to provide a battery exterior body.

### (Production of Lithium Ion Secondary Battery)

### [Preparation of Electrolytic Solution]

Solvents having high permittivity, ethylene carbonate and fluoroethylene carbonate and a solvent having a low viscosity, dimethyl carbonate were mixed so that the volume ratio reached 20/10/70. LiPF₆ was added thereto at a concentration of 1.2 mol/L to thereby prepare a non-aqueous electrolytic solution.

### [Production of Positive Electrode]

In a N-methylpyrrolidone solvent, 95% by mass of LiNi_{0.6}Co_{0.2}Mn_{0.2}O₂ (NMC) as a positive electrode active material, 2% by mass of acetylene black as a conductive material, and 3% by mass of polyvinylidene fluoride (PVdF) as a binder were mixed to form a slurry. The resulting slurry was applied to one surface of 15-µm thick aluminum foil of a 15-µm thick aluminum foil current collector and dried. The foil was then roll-pressed using a press and cut to provide a piece including an active material layer having a width of 50 mm and a length of 30 mm and an uncoated portion having a width of 5 mm and a length of 9 mm as a positive electrode.

### [Production of Negative Electrode]

To 98 parts by mass of a carbonaceous material (graphite), 1 part by mass of an aqueous dispersion of sodium carboxymethyl cellulose (concentration of sodium carboxymethyl cellulose: 1% by mass) and 1 part by mass of an aqueous dispersion of styrene-butadiene rubber (concentration of styrene-butadiene rubber: 50% by mass) were added as a thickening agent and a binder, and they were mixed by a disperser to form a slurry. The resulting slurry was applied to a 10 µm thick copper foil, dried, then roll-pressed with a press, and cut to provide a piece including an active material layer having a width of 52 mm and a length of 32 mm and an uncoated portion having a width of 5 mm and a length of 9 mm, as a negative electrode.

### (Example 19)

### {Production of Aluminum Laminate Cell}

The battery exterior body obtained in Example 16 was folded in half in the length direction with the fluororesin film layer inside, and in the interior thereof, the positive electrode and the negative electrode were arranged so that they faced each other through a 20 µm thick microporous polyethylene film (separator, width: 45 mm, length: 77 mm), and the sides were sealed leaving one side. The non-aqueous electrolytic solution provided above was injected therein, and the non-aqueous electrolytic solution was made to sufficiently permeate into the separator and the like. Thereafter, the assembly was sealed, then pre-charged, and aged to thereby produce a lithium ion secondary battery.

### Industrial Applicability

The fluororesin film of the present disclosure can be suitably used for a battery exterior body.

## Claims

1. A fluororesin film for a battery exterior body, comprising a composition comprising a fluororesin, wherein
an oxygen element ratio obtained when a surface state of one or both surfaces of the film is measured by a scanning X-ray photoelectron spectrometer (XPS/ESCA) after the film is subjected to heat treatment of 180°C × 3 minutes is 1.35 atomic% or more, and
when the film is subjected to heat treatment of 180°C × 10 minutes and then cooled down to 25°C, an absolute value of a rate of dimensional change in MD and TD, as measured before and after the heat treatment, is 2% or less.

2. The fluororesin film for a battery exterior body according to claim 1, wherein the oxygen element ratio is 1.5 atomic% or more.

3. The fluororesin film for a battery exterior body according to claim 1 or 2, comprising tetrafluoroethylene-perfluoroalkyl vinyl ether (PFA) or tetrafluoroethylene-hexafluoropropylene (FEP).

4. The fluororesin film for a battery exterior body according to any one of claims 1 to 3, wherein
a difference between an oxygen element ratio obtained when a surface state of one or both surfaces of the film is measured by a scanning X-ray photoelectron spectrometer (XPS/ESCA), and an oxygen element ratio obtained when the film is measured by a scanning X-ray photoelectron spectrometer (XPS/ESCA) after the film is subjected to etching with an argon gas cluster ion beam at an incidence angle of 45° in the depth direction for 15 minutes is 1.0 atomic% or more.

5. The fluororesin film for a battery exterior body according to any one of claims 1 to 4, wherein, in only one or both surfaces, an adhesion strength when portions of the film in the same plane are bonded to each other at 200°C is more than 30 N/m.

6. The fluororesin film for a battery exterior body according to any one of claims 1 to 5, and according to claim 1 or 2, wherein
an adhesion strength when aluminum foil and the fluororesin film are bonded is 500 N/m or more.

7. The fluororesin film for a battery exterior body according to any one of claims 1 to 6, wherein electrolytic solution permeability of the film is 50 g/m2·day or less.

8. A battery exterior body comprising the fluororesin film according to any one of claims 1 to 7 and a metal layer.

9. The battery exterior body according to claim 8, further comprising a layer other than the metal layer and the fluororesin film, wherein
the layer other than the metal layer and the fluororesin film is at least one selected from the group consisting of polyethylene, polypropylene, polyimide, a liquid crystal polymer, polyphenylene sulfide, a cycloolefin polymer, polystyrene, an epoxy resin, bismaleimide, polyphenylene oxide, polyphenylene ether, and polybutadiene.

10. The battery exterior body according to claim 8 or 9, wherein the fluororesin film is provided on at least one plane in the thickness direction, and is made to be present at a position in contact with an electrolytic solution when a battery is formed.

11. The battery exterior body according to any one of claims 8 to 10, wherein the metal layer is aluminum.

12. The battery exterior body according to any one of claims 8 to 11, wherein an adhesion strength between the aluminum foil and the fluororesin film is 500 N/mm or more.

13. A secondary battery comprising the battery exterior body according to any one of claims 8 to 12 and an electrolytic solution.

14. The secondary battery according to claim 13, wherein the fluororesin film of the battery exterior body is present at a position in contact with the electrolytic solution.
